# EUROPÄISCHE PATENTSCHRIFT

(11) **EP 3 916 180 B1**
(45) Veröffentlichungstag und Bekanntmachung des Hinweises auf die Patenterteilung: **05.07.2023**
(21) Anmeldenummer: 20177440.3
(22) Anmeldetag: 29.05.2020
(51) Int. Cl.: E05B 85/12, E05B 17/00, B29C 45/16

(54) **BETÄTIGUNGSELEMENT, INSBESONDERE GRIFFELEMENT, EINER INNENTÜRGRIFFANORDNUNG EINES FAHRZEUGS UND VERFAHREN ZUR HERSTELLUNG EINES SOLCHEN BETÄTIGUNGSELEMENTS**
ACTUATING ELEMENT, IN PARTICULAR HANDLE ELEMENT, OF AN INNER DOOR HANDLE ARRANGEMENT OF A VEHICLE AND METHOD FOR MANUFACTURING SUCH ACTUATING ELEMENT
ACTIONNEUR MANUEL, EN PARTICULIER ÉLÉMENT DE POIGNÉE, D'UN DISPOSITIF DE POIGNÉE INTÉRIEURE D'UN VÉHICULE ET UN PROCÉDÉ DE FABRICATION DE CET ACTIONNEUR MANUEL

(43) Veröffentlichungstag der Anmeldung: 01.12.2021
(73) Patentinhaber: Illinois Tool Works Inc., Glenview, IL 60025 (US)
(72) Erfinder: FRIES, Elmar, 97285 Röttingen (DE); HENNINGER, Klaus, 97990 Weikersheim (DE)
(74) Vertreter: Meissner Bolte Partnerschaft mbB

(56) Entgegenhaltungen:
- CN-U- 209 509 794
- JP-A- H1 035 289
- KR-A- 20180 107 427
- US-A1- 2004 022 988
- US-A1- 2019 316 390

## Beschreibung

Die vorliegende Erfindung betrifft allgemein Innenfahrzeugkomponenten und insbesondere Innentürgriffanordnungen eines Fahrzeugs. Innentürgriffanordnungen der hierin berücksichtigten Art weisen in der Regel ein Gehäuse und ein an dem Gehäuse angeordnetes bzw. angelenktes Betätigungselement auf.

Insbesondere betrifft die vorliegende Erfindung Betätigungselemente, insbesondere in Gestalt von Griffelementen, für eine Innentürgriffanordnung eines Fahrzeugs sowie entsprechende Verfahren zum Herstellen derartiger Betätigungselemente.

Das erfindungsgemäße Betätigungselement kann beispielsweise ein Griffelement sein. Es kann sich beispielsweise um einen schwenkbar oder gelenkig an einem Gehäuse einer Innentürgriffanordnung gelagerten Griffhebel handeln. Das Betätigungselement kann dazu ausgebildet sein, von einem Fahrzeuginsassen ergriffen zu werden, oder andersartig manipuliert zu werden, um eine Fahrzeugtür von innen zu öffnen und/oder zu schließen.

Bei derartigen Innentürgriffanordnungen bestehen das Gehäuse und das Betätigungselement häufig aus Kunststoff. Aus optischen Gründen besteht jedoch häufig der Wunsch nach einer Metalloptik zumindest des Betätigungselements. Hierzu ist es aus dem Stand der Technik allgemein bekannt, das Betätigungselement, wie beispielsweise das Griffelement einer Innentürgriffanordnung zu verchromen oder andersartig Oberflächen zu behandeln. Auf diese Weise können hochwertige Oberflächen erzeugt werden, während gleichzeitig der mit der Chromschicht versehene Grundkörper des Betätigungselements aus einem belastbaren Kunststoff hergestellt werden kann. Eine Verchromung insbesondere unter Verwendung von Chrom IV ist allerdings aus gesundheitlichen und Umweltschutzgründen problematisch.

Eine Alternative zu einer Verchromung ist die Herstellung des Betätigungselements in einem Spritzgussverfahren mit einem Kunststoff in Metalloptik (Mold-In-Metal-Colour - MIMC). Hiermit kann eine der Verchromung ähnliche Optik erreicht werden.

Problematisch beim MIMC-Prozess sind allerdings Oberflächendefekte, wie Fließlinien oder Senken, insbesondere aufgrund von Schwindung des Materials. Hinzu kommt, dass die hierfür verwendeten Kunststoffe nicht immer ausreichend belastbar sind, insbesondere nicht immer die erforderliche maximale Bruchlast besitzen. Dies gilt im übertragenen Sinne nicht nur für das Betätigungselement der Innentürgriffanordnung, sondern auch für das entsprechende Gehäuse.

Aus der US 2004/022988 A1 ist ein Griffelement für eine Kraftfahrzeugtür bekannt. Das Griffelement weist ein Trägersubstrat aus Kunststoff und eine zumindest bereichsweise die Oberfläche des Trägersubstrats bedeckende Dekorschicht auf. Die Dekorschicht weist einen Sichtbereich, der eine Sichtseite des Griffelements bildet, einen Angussbereich und einen Kantenbereich auf.

Aus der US 2019/316390 A1 ist ferner ein Verfahren zur Herstellung eines Griffelements in einem Mehrkomponenten-Spritzgussverfahren bekannt.

Ausgehend hiervon liegt der Erfindung die Aufgabe zugrunde, ein Betätigungselement, insbesondere Griffelement, einer Innentürgriffanordnung eines Fahrzeugs sowie ein Verfahren zum Herstellen eines solchen Betätigungselements anzugeben, wobei in einer kostengünstigen Weise hochwertige Oberflächen des Betätigungselements bei großer Designfreiheit und gleichzeitig guter Belastbarkeit ermöglicht werden.

Im Hinblick auf das Betätigungselement wird die der Erfindung zugrundeliegende Aufgabe durch den Gegenstand des unabhängigen Patentanspruchs 1 gelöst, wobei vorteilhafte Weiterbildungen des erfindungsgemäßen Betätigungselements in den entsprechenden abhängigen Patentansprüchen angegeben sind.

Im Hinblick auf das Herstellungsverfahren wird die der Erfindung zugrundeliegende Aufgabe durch den Gegenstand des nebengeordneten Patentanspruchs 15 gelöst.

Demgemäß betrifft die Erfindung insbesondere ein vorzugsweise in Gestalt eines Griffelements ausgeführten Betätigungselement einer Innentürgriffanordnung eines Fahrzeugs, wobei das Betätigungselement ein Trägersubstrat vorzugsweise aus Kunststoff und eine zumindest bereichsweise die Oberfläche des Trägersubstrats bedeckende Dekorschicht aufweist.

Erfindungsgemäß ist insbesondere vorgesehen, dass die Dekorschicht einen Sichtbereich aufweist, welcher die sogenannte "A-Seite" des Betätigungselements, d.h. insbesondere im bestimmungsgemäßen Einbauzustand des Betätigungselements und ferner insbesondere im nicht betätigten Zustand des Betätigungselements die Sichtseite des Betätigungselements bildet. Zusätzlich weist die Dekorschicht mindestens einen in einer Angusslippe oder Angusslasche ausgebildeten Angussbereich sowie mindestens einen Kantenbereich oder bogenförmigen Bereich auf, über den der Angussbereich mit dem Sichtbereich der Dekorschicht stetig verbunden ist.

Die Dekorschicht ist vorzugsweise aus einem Kunststoffmaterial gebildet, welches insbesondere verschieden von dem Kunststoffmaterial sein kann, aus welchem das Trägersubstrat des Betätigungselements gebildet ist.

Insbesondere ist die Dekorschicht integral, bevorzugt stoffschlüssig mit dem Trägersubstrat verbunden. Zumindest im eingebauten Zustand entspricht dabei die Sichtseite der Dekorschicht der sogenannten "A-Seite" des Betätigungselements und ist somit zumindest teilweise direkt aus dem Fahrzeuginnenraum sichtbar. Zumindest bereichsweise erstreckt sich die vorzugsweise integral mit dem Trägersubstrat des Betätigungselements ausgebildete Dekorschicht auch zu der sogenannten "B-Seite" des Betätigungselements, d.h. zu der von der A-Seite des Betätigungselements abgewandten Seite.

Erfindungsgemäß ist insbesondere zumindest die Dekorschicht des Betätigungselements in einem Spritzgussverfahren hergestellt bzw. mit dem Trägersubstrat des Betätigungselements verbunden. Bevorzugt kommt jedoch zur Herstellung des Betätigungselements insbesondere ein Zweikomponenten-Spritzgussverfahren zum Einsatz.

Die erfindungsgemäße Lösung zeichnet sich insbesondere dadurch aus, dass die Dekorschicht des Betätigungselements mindestens einen Angussbereich aufweist, über den in einem Spritzgießwerkzeug die erhitzte Spritzgussmasse über mindestens einen Angusskanal in einen Formhohlraum eingebracht wird, welcher zumindest bereichsweise die Form des Betätigungselements und insbesondere die Form der Dekorschicht des Betätigungselements entspricht.

Der mindestens eine Angussbereich ist dabei in einer Angusslippe oder Angusslasche ausgebildet, wobei der Angussbereich über mindestens einen Kantenbereich oder bogenförmigen Bereich mit dem Sichtbereich der Dekorschicht stetig verbunden ist.

Dies hat den Vorteil, dass durch eine rückseitige Anspritzung in den Innenbereich des Formkörpers keine Anspritzmarkierung auf der Sichtseite des Betätigungselements, d.h. auf der A-Seite des Betätigungselements, sichtbar ist. Dadurch ist auch bei einer nachträglichen äußeren Oberflächenbehandlung keine zusätzliche Entfernung der Anspritzmarkierung notwendig.

Indem der mindestens eine Angussbereich in einer Angusslippe oder Angusslasche ausgebildet ist, wobei diese Angusslippe oder Angusslasche über mindestens einen Kantenbereich oder bogenförmigen Bereich mit dem Sichtbereich der Dekorschicht stetig verbunden ist, ist darüber hinaus beim Zuführen der erhitzten Spritzgussmasse in den Formhohlraum eine Homogenisierung der erhitzten Spritzgussmasse bewirkbar, so dass im Formhohlraum die Schmelze (die erhitzte Spritzgussmasse) mit einer reduzierten Strömungsgeschwindigkeit und ohne lokale Verdichtungen von dem Angussbereich (d.h. von der Angusslippe oder der Angusslasche) über den mindestens einen Kantenbereich oder bogenförmigen Bereich zum Sichtbereich der Dekorschicht fließen kann. Hierdurch wird erreicht, dass die erhitzte Spritzgussmasse über mindestens einen "sanften" Übergang zum Sichtbereich der Dekorschicht gelangt.

Indem auf diese Weise die erhitzte Spritzgussmasse beim Einleiten in den Formhohlraum zunächst in einem vom Sichtbereich des Betätigungselements verschiedenen Bereich beruhigt und homogenisiert wird, und indem anschließend die so homogenisierte erhitzte Spritzgussmasse stetig in den Bereich des Formhohlraums gelangt, der den Sichtbereich der Dekorschicht entspricht, ist es möglich, zur Ausbildung der Dekorschicht ein Kunststoffmaterial mit integrierten Pigmenten zu verwenden, ohne dass die Gefahr besteht, dass im Sichtbereich der Dekorschicht unerwünschte Fließlinien entstehen.

Diese Maßnahme ist insbesondere dann zu berücksichtigen, wenn zur Ausbildung der Dekorschicht ein Kunststoffmaterial mit eingelagerten Pigmenten verwendet wird, da die Pigmente in der Schmelze (d.h. in der erhitzten Spritzgussmasse) kein Kontinuum bilden. Von daher ist entsprechend Sorge zu tragen, dass sich die Schmelze mit den eingelagerten Pigmenten im Sichtbereich des Betätigungselements nicht verdichtet, da eine lokale Verdichtung der Schmelze zu einer Verdichtung der Pigmente führen würde, was beim fertiggestellten Betätigungselement entsprechende Fehler (insbesondere Linien) generieren würde.

Somit kann durch das Vorsehen eines in einer Angusslippe oder Angusslasche ausgebildeten Angussbereichs, der über mindestens einen Kantenbereich oder bogenförmigen Bereich mit dem Sichtbereich der Dekorschicht stetig verbunden ist, beim Einführen der erhitzten Spritzgussmasse in den Formhohlraum eine Strömungsberuhigung der Schmelze erzielt werden, und zwar bevor oder während die Schmelze vom Angussbereich zum Sichtbereich der Dekorschicht strömt. Auf diese Weise wird eine höhere Oberflächenqualität erzielt, wobei auch ein optional vorgesehenes Oberflächenfinish bei einer nachträglichen Behandlung z.B. durch Lackieren verbessert werden kann.

Im Hinblick auf die Angusslippe oder die Angusslasche, in welcher der mindestens eine Angussbereich ausgebildet ist, ist anzumerken, dass es sich bei dieser Angusslippe oder Angusslasche um einen relativ kleinen Volumenbereich handelt, in den die erhitzte Spritzgussmasse über entsprechende Angusskanäle dem Formhohlraum zugeführt wird.

Dadurch, dass dieser die Angusslippe oder die Angusslasche ausbildende relativ kleine Volumenbereich dann stetig über mindestens einen Kantenbereich oder bogenförmigen Bereich mit dem Bereich des Formhohlraums strömungsmäßig verbunden ist, der letztendlich den Sichtbereich des Betätigungselements darstellt, wird beim Fließen der Schmelze von dem Angussbereich zum Sichtbereich des Betätigungselement in einer sanften Weise die Schmelze umgelenkt und gleichmäßig entspannt, infolgedessen lokale Verdichtungen der Schmelze im Sichtbereich der Dekorschicht wirksam verhindert werden.

Wie eingangs erläutert, dient die Innentürgriffanordnung zum Öffnen und/oder zum Schließen einer Fahrzeugtür aus dem Fahrzeuginnenraum. Dazu wird die Innentürgriffanordnung im Innenraum eines Fahrzeugs, wie eines PKW oder LKW, montiert. Die Erfindung betrifft entsprechend auch ein Fahrzeug mit einer darin montierten Innentürgriffanordnung.

Die Innentürgriffanordnung umfasst ein Gehäuse, mit dem sie an einer Fahrzeugtür befestigt wird. An dem Gehäuse ist ein Betätigungselement angeordnet, welches ein Fahrzeuginsasse manuell betätigen, beispielsweise ergreifen, kann. Das Betätigungselement kann beweglich an dem Gehäuse gelagert sein, beispielsweise schwenkbar oder translatorisch bewegbar. Es kann sich beispielsweise um ein schwenkbar an dem Gehäuse gelagertes Griffelement, insbesondere Griffhebel, handeln. Das Betätigungselement kann aber z.B. auch ein von einem Fahrzeuginsassen betätigter Taster oder dergleichen sein. Das Betätigungselement kann dazu ausgebildet sein, von einem Fahrzeuginsassen betätigt zu werden, um eine Fahrzeugtür von innen zu öffnen oder zu schließen.

Das Betätigungselement weist insbesondere ein Trägersubstrat aus einem ersten Kunststoff und eine zumindest bereichsweise die Oberfläche des Trägersubstrats bedeckende Dekorschicht auf. Die Dekorschicht besteht vorzugsweise aus einem anderen Material als das Trägersubstrat.

Das Trägersubstrat trägt die Dekorschicht, wobei die Dekorschicht vorzugsweise zumindest bereichsweise den Sichtabschnitt des Betätigungselements definiert, d.h. den Bereich des Betätigungselements, der vom Fahrzeuginnenraum direkt sichtbar und in der Regel dem Fahrzeuginnenraum zugewandt ist. Er bildet die sogenannte "A-Oberfläche", an die in optischer Hinsicht besonders hohe Anforderungen gestellt werden.

Hingegen bildet das Trägersubstrat zumindest bereichsweise die sogenannte "B-Oberfläche" und kann zumindest bereichsweise vom Fahrzeuginnenraum her nicht direkt sichtbar sein. Das Trägersubstrat kann beispielsweise an der dem Fahrzeuginnenraum abgewandten Rückseite des Betätigungselements angeordnet sein. Allerdings kann das Trägersubstrat bereichsweise auch eine dem Fahrzeuginnenraum zugewandte und von diesem direkt sichtbare Sichtfläche bilden.

Eine Vorderseite des Betätigungselements wird vorzugsweise durch die dem Fahrzeuginnenraum zugewandten Oberflächen des Betätigungselements definiert, wenn das Betätigungselement im Fahrzeug eingebaut ist und sich in einer Ruheposition befindet. Die Grenze zwischen der Vorderseite und der Rückseite des Betätigungselements wird vorzugsweise durch die Oberflächen gegeben, die parallel zu der Oberfläche der Fahrzeugoberfläche weisen, die das Betätigungselement in einem in das Fahrzeug eingebauten und in einer Ruheposition befindenden Zustand direkt umgibt.

Vorzugsweise weist eine Oberfläche in Richtung ihrer Normalen (nach außen vom Material weggerichtet) auf.

Direkt sichtbar bedeutet vorzugsweise, dass es keine weitere Beschichtung (z.B. Lack oder Chrom) oder Umspritzung der Dekorschicht gibt. Der Kunststoff der Dekorschicht ist vorzugsweise die äußerste Oberflächenschicht des Betätigungselements im Bereich der direkt sichtbaren Bereiche der Dekorschicht.

Die Angabe von "erstem" Material/Kunststoff und "zweitem" Material/Kunststoff bestimmt nicht die Reihenfolge ihrer Herstellung. Die Erfindung umfasst zunächst die Herstellung des Trägersubstrats (erster Kunststoff) und dann die Herstellung der Dekorschicht (zweiter Kunststoff), aber auch zunächst die Herstellung der Dekorschicht und dann die Herstellung des Trägersubstrats.

Die Dekorschicht ist insbesondere integral mit dem Trägersubstrat verbunden, was vorzugsweise stoffschlüssig bedeutet, d.h., dass sie durch atomare oder molekulare Kräfte zusammengehalten werden und unlösbar, d.h. nur durch Zerstörung trennbar sind. Die Bedeutung umfasst jedoch auch eine Formschlussverbindung der Dekorschicht mit dem Trägersubstrat, wobei der Formschluss im Spritzgussverfahren innerhalb eines Spritzgusswerkzeugs hergestellt worden ist. Eine Bindung durch atomare oder molekulare Kräfte ist daher nicht unbedingt erforderlich, sondern lediglich bevorzugt.

In dem erfindungsgemäß für die hinsichtlich der optischen Anforderungen besonders kritische Dekorschicht, und insbesondere für den Sichtbereich der Dekorschicht, ein anderes Material als für das Trägersubstrat verwendet wird, können das Trägersubstrat und die Dekorschicht und vorzugsweise das Trägersubstrat und der Sichtbereich der Dekorschicht gezielt an die jeweiligen Anforderungen angepasst werden.

Durch die stoffschlüssige Verbindung ist gleichzeitig eine einstückige Komponente gebildet, so dass keine zusätzlichen Befestigungsmittel erforderlich sind, um das Trägersubstrat des Betätigungselements mit der Dekorschicht zu verbinden. Dies verbessert nicht nur das optische Erscheinungsbild, sondern erleichtert auch die Herstellung und Montage des erfindungsgemäßen Betätigungselements.

Beim Gebrauch des Betätigungselements bestehen an dem Betätigungselement zum Teil nicht unerhebliche Anforderungen hinsichtlich der Belastbarkeit, insbesondere der maximalen Bruchlast. Diese können erfindungsgemäß problemlos erhöht werden, und zwar indem für das Trägersubstrat ein entsprechend belastbares Material gewählt wird. Gleichzeitig kann durch Wahl eines geeigneten anderen Materials für die Dekorschicht und insbesondere für den Sichtbereich der Dekorschicht eine optisch besonders hochwertige Oberfläche realisiert werden, ohne dass das hierzu verwendete und häufig nicht ausreichend belastbare Material die Gesamtbelastbarkeit des Betätigungselements insgesamt beeinträchtigt.

So ist beispielsweise für die Dekorschicht und insbesondere für den Sichtbereich der Dekorschicht ein Material mit Metalloptik möglich. Eine wie erläutert aus Umweltschutz- und gesundheitlichen Gründen problematische Verchromung kann somit entfallen.

Die Dekorschicht und insbesondere der Sichtbereich der Dekorschicht kann eine erheblich geringere Dicke aufweisen als das Trägersubstrat. Beispielsweise kann die größte Dicke der Dekorschicht vorzugsweise im Sichtbereich der Dekorschicht weniger als 50 % der kleinsten Dicke des Trägersubstrats, vorzugsweise weniger als 20 % der kleinsten Dicke des Trägersubstrats, betragen. Dadurch kann die Steifigkeit des Bestätigungselements, die wesentlich durch das Trägersubstrat bereitgestellt wird, maximiert werden bei gleichzeitig geringer Neigung zu Oberflächenfehlern der Dekorschicht insbesondere im Sichtbereich der Dekorschicht. Insbesondere wenn beispielweise nur eine dem Fahrzeuginnenraum zugewandte Oberfläche durch die Dekorschicht und insbesondere den Sichtbereich der Dekorschicht gebildet ist, bildet dies eine einfache und ohne Oberflächenfehler herstellbare Geometrie.

Die Dekorschicht und vorzugsweise der Sichtbereich der Dekorschicht werden insbesondere durch einen insbesondere an das Trägersubstrat des Betätigungselements angespritzten Abschnitt (Angussbereich) gebildet sein.

Erfindungsgemäß ist in diesem Zusammenhang vorgesehen, dass der mindestens eine Angussbereich, über den das zur Ausbildung der Dekorschicht notwendige Material (zweites Material/Kunststoffmaterial) in den entsprechenden Formhohlraum eingespritzt wird, an einem dem Sichtbereich der Dekorschicht abgewandten Bereich und in einer Angusslippe oder Angusslasche ausgebildet ist. Der Bereich, in welchem die Angusslippe oder Angusslasche des mindestens einen Angussbereichs für das zweite Material der Dekorschicht ausgebildet ist, ist strömungsmäßig mit dem Sichtbereich der Dekorschicht verbunden, wobei sich der Bereich der Angusslippe oder der Angusslasche vom effektiven Strömungsquerschnitt her gesehen stetig vergrößert und beim Übergang zum Sichtbereich der Dekorschicht umgelenkt wird. Wie bereits erläutert kann dadurch in effektiver Weise eine Homogenisierung und Entspannung der erhitzten Spritzgussmasse beim Ausbilden der Dekorschicht erzielt werden.

Gemäß einer besonders praxisgemäßen Ausgestaltung kann das Betätigungselement in einem Zweikomponenten-Spritzgussverfahren hergestellt worden sein. Dies erlaubt eine besonders einfache und kostengünstige Herstellung des Betätigungselements.

Gleichzeitig können durch die Kombination des erfindungsgemäßen Aufbaus aus

Trägersubstrat und Dekorschicht und durch das Vorsehen des Angussbereichs in einer Angusslippe oder Angusslasche in einem Bereich der Dekorschicht, der über einen Kantenbereich oder bogenförmigen Bereich mit dem Sichtbereich der Dekorschicht stetig verbunden ist, bei der Herstellung in einem Zweikomponenten-Spritzgussverfahren besonders effizient Oberflächenfehler minimiert werden. Es hat sich gezeigt, dass durch das Vorsehen des Angussbereichs für die Dekorschicht in einer Angusslippe oder Angusslasche, die über einen Kantenbereich oder bogenförmigen Bereich mit dem Sichtbereich der Dekorschicht stetig verbunden ist, in besonderem Maße eine Schwindung des Kunststoffmaterials der Dekorschicht beim Aushärten des Kunststoffmaterials der Dekorschicht reduziert/minimiert werden, was zu Oberflächenfehlern, wie Fließlinien oder Senken, führen würde.

Indem gemäß der genannten Ausgestaltung der Dekorschicht und vorzugsweise des Sichtbereichs der Dekorschicht an dem aus einem anderen Material gebildeten Trägersubstrat angespritzt wird, werden eine Schwindung und die damit einhergehenden Oberflächendefekte minimiert. So bildet das Trägersubstrat eine stabile Grundlage für das Anspritzen der Dekorschicht und vorzugsweise des Sichtbereichs der Dekorschicht, wodurch Schwindung wesentlich reduziert werden kann. Fließlinien und Senken können zuverlässig vermieden werden.

Gleichzeitig erlaubt die vorgenannte Ausgestaltung mit nur einem Spritzgusswerkzeug die Herstellung unterschiedlicher Dekorschichten, vorzugsweise Sichtbereiche, z.B. aus Kunststoffen unterschiedlicher Farben, abhängig von dem jeweiligen Anwendungsfall. Die Flexibilität wird dadurch weiter erhöht.

Wie bereits dargelegt, ist es insbesondere dann, wenn als Material für die Dekorschicht ein Kunststoffmaterial mit eingelagerten Pigmenten verwendet wird, bevorzugt, dass dieses Material als erhitztes Spritzgussmaterial (Schmelze) in einer strömungsberuhigten Weise stetig in den Sichtbereich der Dekorschicht eindringt. Zu diesem Zweck wird insbesondere vorgeschlagen, dass in der Dekorschicht bei der Ausbildung dieser ein Homogenisierungsbereich vorgesehen ist, in welchem die über Angusskanäle in den Formhohlraum eingespritzte Kunststoffmasse zunächst beruhigt wird, und dann möglichst gleichmäßig und stetig in den Bereich des Formhohlraums strömt, der letztendlich beim fertiggestellten Betätigungselement den Sichtbereich der Dekorschicht ausbildet.

In diesem Zusammenhang wird erfindungsgemäß vorgeschlagen, den Angussbereich, über den das erhitzte Spritzgussmaterial für die Dekorschicht in den Formhohlraum eingespritzt wird, in einer Angusslippe oder Angusslasche ausgebildet ist, wobei diese Angusslippe oder Angusslasche über mindestens einen Kantenbereich oder bogenförmigen Bereich strömungsmäßig stetig mit dem Sichtbereich der Dekorschicht verbunden ist.

Dabei ist es bevorzugt, wenn in dem sogenannten Homogenisierungsbereich die Schmelze (die erhitzte Spritzgussmasse) in einen größeren Volumenbereich des Formhohlraums vorzugsweise in einer stetigen Weise expandieren kann.

Um dies zu erreichen, ist gemäß Ausgestaltungen der Erfindung vorgesehen, dass die Angusslippe oder Angusslasche, in welcher der mindestens eine Angussbereich ausgebildet ist, in einer Draufsicht eine zumindest im Wesentlichen U-förmige, V-förmige oder keilförmige Gestaltung aufweist, wobei sich die so ausgebildete Angusslippe oder Angusslasche von dem mindestens einen Kantenbereich oder bogenförmigen Bereich in Richtung des mindestens einen Angussbereichs hin verjüngt.

Mit dieser Ausgestaltung der Angusslippe oder Angusslasche, in welcher der mindestens eine Angussbereich ausgebildet ist, wird wirksam erreicht, dass beim Einspritzen der Schmelze die Schmelze im Formhohlraum von einem relativ kleinen Volumenbereich in Richtung des Volumenbereichs des Formhohlraums expandiert, welcher im fertiggestellten Zustand des Betätigungselements den Sichtbereich der Dekorschicht ausbildet. Durch diese vorzugsweise stetige Volumenzunahme erfolgt eine Strömungsberuhigung der Schmelze bei deren Übergang von dem Angussbereich zum Sichtbereich der Dekorschicht.

Insbesondere ist es von Vorteil, die Angusslippe oder Angusslasche, in welcher der mindestens eine Angussbereich ausgebildet ist, vorzugsweise in einem Endbereich des Betätigungselements und insbesondere in einem konvergierenden Bereich des Betätigungselements auszubilden.

Als "konvergierender Bereich" des Betätigungselements kommt insbesondere ein Eckbereich an einem Endbereich des Betätigungselements in Frage, insbesondere ein spitzförmig oder keilförmig zulaufender Eckbereich.

Indem die Angusslippe oder Angusslasche, in einem Endbereich des Betätigungselements und insbesondere in einem konvergierenden Bereich des Betätigungselements ausgebildet wird, kann in vorteilhafter Weise beim Ausbilden des Sichtbereiches des Betätigungselements der Quellfluss der Kunststoffschmelze stetig breiter wird, was einen positiven Einfluss auf eine Homogenisierung der Kunststoffschmelze hat.

Alternativ oder zusätzlich zu der zuvor genannten Ausführungsform, bei welcher die Angusslippe oder Angusslasche, in welcher der mindestens eine Angussbereich ausgebildet ist, in einer Draufsicht eine zumindest im Wesentlichen U-förmige, V-förmige oder keilförmige Gestaltung aufweist, ist vorgesehen, dass in einer Draufsicht auf die Angusslippe oder Angusslasche die Angusslippe oder Angusslasche zwei in Richtung des mindestens einen Kantenbereiches oder bogenförmigen Bereichs zueinander divergierende und an das Trägersubstrat angrenzende Grenzlinien aufweist, welche im Bereich des mindestens einen Angussbereichs insbesondere in einer stetigen Weise und vorzugsweise über mindestens einen und insbesondere zwei Kurvenbereiche mit konstanter Krümmung zusammenlaufen.

Auch bei dieser Ausgestaltung der Angusslippe bzw. Angusslasche wird in einer besonders effizienten aber dennoch einfachen Weise ein geeigneter Homogenisierungsbereich für die erhitzte Kunststoffschmelze beim Ausbilden der Dekorschicht des Betätigungselements erzielt.

In diesem Zusammenhang hat es sich als besonders effizient gezeigt, dass zwischen den in Richtung des mindestens einen Kantenbereich oder bogenförmigen Bereichs divergierende Grenzlinien ein Winkel α aufgespannt ist, wobei 90° > α > 10° gilt. Selbstverständlich kommen hier aber auch andere Winkelbereiche in Frage.

Vorzugsweise gehen dabei die divergierenden Grenzlinien jeweils über einen Kurvenbereich mit konstanter und insbesondere gleicher Krümmung in den mindestens einen Kantenbereich oder bogenförmigen Bereich über. Gemäß Realisierungen des erfindungsgemäßen Betätigungselements ist hierbei vorgesehen, dass die Krümmung des Kurvenbereiches, über den die divergierenden Grenzlinie jeweils in den mindestens einen Kantenbereich oder bogenförmigen Bereich übergehen, vorzugsweise der Krümmung des mindestens einen Kurvenbereiches entspricht, über den die an das Trägersubstrat angrenzenden Grenzlinien zusammenlaufen.

Eine Homogenisierung und Beruhigung der Kunststoffschmelze beim Ausbilden der Dekorschicht und insbesondere beim Ausbilden des Sichtbereichs der Dekorschicht ist in besonders bevorzugter Weise möglich, dass nicht nur der Volumenbereich beim Angussbereich in Richtung des Sichtbereichs der Dekorschicht zunimmt, sondern dass zusätzlich hierzu auch eine Ablenkung der erhitzten Kunststoffschmelze beim Übergang in den Sichtbereich der Dekorschicht erfolgt.

Zu diesem Zweck ist es bevorzugt, dass der mindestens eine Kantenbereich oder bogenförmige Bereich zwischen dem mindestens einen Angussbereich und dem Sichtbereich der Dekorschicht derart gewählt ist, dass die Dekorschicht von dem mindestens einen Angussbereich zu dem Sichtbereich vorzugsweise in stetiger Weise um einen Winkel β von mindestens 35° und noch bevorzugter in stetiger Weise um einen Winkel β um mindestens 45° umgelenkt wird.

Alternativ oder zusätzlich hierzu ist gemäß Ausgestaltungen der erfindungsgemäßen Lösung vorgesehen, dass der mindestens eine Kantenbereich oder bogenförmige Bereich zwischen dem mindestens einen Angussbereich und dem Sichtbereich der Dekorschicht derart gewählt ist, dass die Dekorschicht von dem Angussbereich zu dem Sichtbereich vorzugsweise in einer stetigen Weise um einen Winkel β von maximal 155° und noch bevorzugter in einer stetigen Weise um einen Winkel β von maximal 145° umgelenkt wird.

Gemäß einer bevorzugten Realisierung des erfindungsgemäßen Betätigungselements ist in diesem Zusammenhang vorgesehen, dass die Angusslippe oder Angusslasche in einem Bereich der Dekorschicht ausgebildet ist, der über einen einzigen Kantenbereich oder bogenförmigen Bereich vorzugsweise in einer stetigen Weise mit dem Sichtbereich der Dekorschicht verbunden ist, wobei über den einzigen Kantenbereich oder bogenförmigen Bereich die Dekorschicht von dem Angussbereich zu dem Sichtbereich in einer stetigen Weise um einen Winkel β von mindestens 35° und maximal von 155° umgelenkt wird, und wobei der Angussbereich vorzugsweise über einen geradlinigen Tunnelanguss gebildet ist.

In diesem Zusammenhang ist es bevorzugt, dass der Bereich der Dekorschicht, in welchem die Angusslippe oder Angusslasche ausgebildet ist, zumindest beim Kantenbereich oder bogenförmigen Bereich eine erste Schichtdicke B aufweist, wobei der Bereich der Dekorschicht, in welchem der Sichtbereich ausgebildet ist, zumindest beim Kantenbereich oder bogenförmigen Bereich eine zweite Schichtdicke A aufweist.

Hierbei sollte insbesondere die erste Schichtdicke B kleiner als die zweite Schichtdicke A sein, um beim Übergang der erhitzten Kunststoffschmelze von dem Angussbereich zu dem Sichtbereich der Dekorschicht eine wirksame Strömungsberuhigung und Homogenisierung zu erreichen.

Gemäß Realisierungen des erfindungsgemäßen Betätigungselements beträgt die zweite Schichtdicke A zumindest beim Kantenbereich oder bogenförmigen Bereich vorzugsweise 0,5 mm bis 3,5 mm, während die erste Schichtdicke B zumindest beim Kantenbereich oder bogenförmigen Bereich vorzugsweise 0,4 mm bis 3,3 mm beträgt. Selbstverständlich sind hier aber auch andere Größenordnungen für die erste und/oder zweite Schichtdicke denkbar.

Gemäß bevorzugten Weiterbildungen der zuletzt genannten Ausführungsformen ist vorgesehen, dass der Angussbereich vorzugsweise zumindest im Wesentlichen rund oder oval ausgebildet ist und einen mittleren Durchmesser C aufweist, wobei der mittlere Durchmesser C des Angussbereichs kleiner als die Schichtdicke B des Bereichs der Dekorschicht ist, in welchem die Angusslippe oder Angusslasche ausgebildet ist.

Gemäß Realisierungen der zuletzt genannten Ausführungsform ist insbesondere vorgesehen, dass der mittlere Durchmesser C des Angussbereichs vorzugsweise 0,3 mm bis 3,1 mm beträgt, während alternativ oder zusätzlich hierzu die Schichtdicke B des Bereichs der Dekorschicht, in welchem die Angusslippe oder Angusslasche ausgebildet ist, vorzugsweise 0,4 mm bis 3,3 mm beträgt.

Gemäß Ausführungsformen des erfindungsgemäßen Betätigungselements ist vorgesehen, dass die Angusslippe oder Angusslasche über einen Zwischenbereich in den Sichtbereich der Dekorschicht übergeht, wobei zwischen dem Zwischenbereich und dem Sichtbereich der einzige Kantenbereich oder bogenförmige Bereich angeordnet ist, und wobei im Bereich der Angusslippe oder Angusslasche und im Zwischenbereich die Dekorschicht eine Schichtdicke B aufweist, welche vorzugsweise in einem Bereich zwischen 0,4 mm bis 3,3 mm liegt.

Andererseits ist gemäß Weiterbildungen der zuletzt genannten Ausführungsform vorgesehen, dass der Zwischenbereich eine Länge D aufweist, die größer als die Schichtdicke A der Dekorschicht im Sichtbereich ist (zumindest beim Kantenbereich oder bogenförmigen Bereich), wobei die Dekorschicht im Sichtbereich eine Schichtdicke von vorzugsweise 0,5 mm bis 3,5 mm aufweist.

Mit diesen Dimensionen wird ein Homogenisierungsbereich ausgebildet, in welchem die erhitzte Kunststoffschmelze beim Ausbilden der Dekorschicht homogenisiert und strömungsmäßig beruhigt wird, um lokale Verdichtungen der Schmelze zu vermeiden. Auf diese Weise ist eine besonders hochwertige Oberflächenqualität der Dekorschicht realisierbar.

Gemäß Ausführungsformen des erfindungsgemäßen Betätigungselements ist der Angussbereich auf einer dem Sichtbereich des Betätigungselements gegenüberliegenden Seite ausgebildet.

Bei dieser Ausführungsform ist insbesondere die Angusslippe oder Angusslasche in einem Bereich der Dekorschicht ausgebildet, der über einen ersten Kantenbereich oder bogenförmigen Bereich mit einem Zwischenbereich der Dekorschicht verbunden ist, wobei der Zwischenbereich der Dekorschicht über einen zweiten Kantenbereich oder bogenförmigen Bereich vorzugsweise in stetiger Weise mit dem Sichtbereich der Dekorschicht verbunden ist.

Im ersten Kantenbereich oder bogenförmigen Bereich wird die Dekorschicht um einen Winkel γ von mindestens 45° und vorzugsweise um einen Winkel γ von etwa 90° umgelenkt, wobei im zweiten Kantenbereich oder bogenförmigen Bereich der Dekorschicht die Dekorschicht vorzugsweise in einer stetigen Weise um einen Winkel β von mindestens 35° und vorzugsweise maximal 155° umgelenkt wird.

Um bei dieser Ausführungsform eine möglichst optimale Homogenisierung der über den Angussbereich eingeschossenen Schmelze zu erzielen, ist bevorzugt vorgesehen, dass der Bereich der Dekorschicht, in welchem der Sichtbereich ausgebildet ist, zumindest beim Kantenbereich oder bogenförmigen Bereich eine Schichtdicke A aufweist, wobei im Zwischenbereich die Dekorschicht zumindest beim Kantenbereich oder bogenförmigen Bereich eine Schichtdicke B aufweist, wobei die Schichtdicke B kleiner als die Schichtdicke A ist.

So ist es beispielsweise denkbar, dass die Schichtdicke B im Zwischenbereich der Dekorschicht zwischen 0,6 und 1,4 mm liegt, während die Schichtdicke A der Dekorschicht im Sichtbereich (zumindest beim Kantenbereich oder bogenförmigen Bereich) zwischen 0,8 bis 1,6 mm liegt.

Auf diese Weise expandiert die flüssige Schmelze beim Übergang von dem Zwischenbereich in den Sichtbereich der Dekorschicht, infolgedessen die Schmelze beruhigt wird und keine lokalen Verdichtungen in der Schmelze auftreten können.

In diesem Zusammenhang ist es besonders bevorzugt, dass der Angussbereich vorzugsweise zumindest im Wesentlichen rund oder oval ausgebildet ist und einen mittleren Durchmesser C aufweist, wobei der mittlere Durchmesser C des Angussbereichs kleiner als die Schichtdicke B des Zwischenbereichs der Dekorschicht ist. Beispielsweise kann der mittlere Durchmesser C des Angussbereichs in einem Bereich zwischen 0,4 bis 1,2 mm liegen.

Gemäß Ausführungsformen der vorliegenden Erfindung ist das Trägersubstrat oder die Dekorschicht in einem ersten Spritzgussschuss unter Verwendung einer ersten Formhälfte und einer zweiten Formhälfte hergestellt worden, was zu einem ersten Formling führt. In einem zweiten Spritzgussschuss auf den ersten Formling wird dann die Dekorschicht bzw. das Trägersubstrat vorzugsweise auf einer Außenfläche des ersten Formlings hergestellt, und zwar insbesondere nach einem Wechsel der ersten und/oder zweiten Formhälfte, was zu einem zweiten Formling führt, während der erste Formling in einer von der ersten Formhälfte und der zweiten Formhälfte verbleibt, bis der zweite Formling auf ihn geschossen worden ist.

Hierdurch kann eine gut definierte Grenze zwischen dem ersten und dem zweiten Kunststoff und eine besonders hochwertige Oberfläche erzielt werden, da jeder von dem Trägersubstrat und der Dekorschicht in einer dafür optimierten geometrischen Gestaltung geschossen wird und der erste Formling genau dort positioniert wird, wo er für den zweiten Spritzgussschuss erwartungsgemäß positioniert sein sollte.

Gemäß Ausführungsformen weist der zweite Kunststoff in dem Bereich, in welchem der Kantenbereich oder bogenförmige Bereich ausgebildet ist, eine erhöhte Dicke gegenüber einer Dicke des zweiten Kunststoffes in einem weiter zum Angussbereich liegenden Bereich auf. Hierdurch ist es möglich, eine Kante oder einen bogenförmigen Bereich durch das zweite Material zu erzeugen, ohne einen Hinterschnitt zu erzeugen. Dies ist daher einfacher herzustellen.

Durch das Vorsehen eines entsprechenden Homogenisierungsbereichs für die Schmelze des zweiten Kunststoffs kann die Qualität des Oberflächenerscheinungsbilds, insbesondere, wenn eine hochglänzende und/oder metallisch anmutende Oberfläche gewünscht wird, verbessert werden, da der zweite Kunststoff breitflächig in den Bereich fließen kann, der zu einer Oberfläche auf der Vorderseite des Betätigungsabschnitts wird.

Gemäß Ausführungsformen erstreckt sich der mindestens eine Kantenbereich oder bogenförmige Bereich des zweiten Kunststoffs, der sich von einer Vorderseite des Betätigungselements zur Rückseite des Betätigungselements erstreckt, über mindestens 25%, vorzugsweise mindestens 40%, besonders bevorzugt mindestens 70%, und am bevorzugtesten 99% der Grenze zwischen Vorderseite und Rückseite des Betätigungselements, vorzugsweise entlang mindestens eines oberen Bereichs des Betätigungselements.

Hierdurch kann das Erscheinungsbild des Betätigungselements aus Sicht des Fahrzeuginnenraums weiter verbessert werden, da sich die Dekorschicht weitgehend nach hinten erstreckt. So ist beispielsweise die Tatsache, dass das Betätigungselement aus zwei Materialien besteht, für einen Insassen des Fahrzeugs möglicherweise nicht wahrnehmbar, wenn der obere Teil des Betätigungselements, wenn er konventionell in der Fahrzeugtür installiert ist, durch die erste Komponente gebildet wird, die sich nach hinten erstreckt.

Gemäß bevorzugten Ausführungsformen weist die Dekorschicht über mindestens 70%, vorzugsweise mindestens 80% seines Sichtbereichs eine konstante Dicke auf, d.h. im Zweifelsfall mit einer Abweichung von weniger als 30%, vorzugsweise weniger als 20% der durchschnittlichen Dicke.

Hierdurch wird die Optik der Dekorschicht weiter verbessert, da der Fluss des zweiten Kunststoffmaterials verbessert wird.

Vorzugsweise hat das Trägersubstrat in den Bereichen, in denen die Dekorschicht eine konstante Dicke aufweist, eine variable Dicke, d.h. im Zweifelsfall mit einer Abweichung von mehr als 30% vorzugsweise mehr als 50% der durchschnittlichen Dicke. Die Dicke wird vorzugsweise von der Vorderseite zur Rückseite gemessen, und zwar entlang einer Flächennormalen.

Gemäß Ausführungsformen des erfindungsgemäßen Betätigungselements weist die Dekorschicht über 70%, vorzugsweise mindestens 80% seines Sichtbereichs eine Dicke in einem Bereich von 0,5 bis 3,5 mm und vorzugsweise in einem Bereich von 0,7 mm bis 1,7 mm auf.

Hierdurch wird die Optik der Dekorschicht weiter verbessert, da der Fluss des zweiten Kunststoffmaterials beim Ausbilden der Dekorschicht verbessert wird. Hierbei wurde festgestellt, dass die Dicke weder kleiner sein sollte, um Hindernisse zu vermeiden, noch größer sein sollte, um Zebramuster zu vermeiden, als das angegebene Intervall, vorzugsweise sogar das bevorzugte Intervall, um das Risiko dieser unerwünschten Effekte zu minimieren.

Gemäß Ausgestaltungen des erfindungsgemäßen Betätigungselements weist die Dekorschicht über 70%, vorzugsweise mindestens 90% seines Sichtbereichs eine Oberflächenrauigkeit RA keiner oder gleich 2 µm, vorzugsweise kleiner oder gleich 1,1 µm, oder bevorzugt einen Glanz von mindestens 60 Glanzeinheiten gemessen bei 60°, vorzugsweise 70 Glanzeinheiten gemessen bei 60°, auf.

Hierdurch wird die Optik der Dekorschicht weiter verbessert. Dabei wurde festgestellt, dass sich die Erfindung besonders für Hochglanzoberflächen eignet, die sehr empfindlich auf Strömungsturbulenzen und Materialschrumpfung bei der Ausbildung der Dekorschicht reagieren.

Gemäß einer weiteren Ausgestaltung macht die Dekorschicht mindestens 90% und vorzugsweise mindestens 99% des Sichtbereichs des Betätigungselements aus.

Weiterhin kann das Trägersubstrat aus einem verstärkten Kunststoff, insbesondere einem glasfaserverstärkten Kunststoff, bestehen. Hierdurch können besonders gute Trägereigenschaften erreicht werden. Grundsätzlich sind unterschiedlichste Materialkombinationen für das Trägersubstrat und die Dekorschicht denkbar. Einige mögliche Materialkombinationen werden nachfolgend lediglich beispielhaft angegeben:
- Trägersubstrat PA6 verstärkt / Dekorschicht PA6 Dekor
- Trägersubstrat PA6 mit Cool-Touch-Effekt / Dekorschicht PA6 Dekor
- Trägersubstrat SAN verstärkt / Dekorschicht PC-ABS oder ABS
- Trägersubstrat POM verstärkt / Dekorschicht POM Dekor.

Gemäß weiteren Ausgestaltungen können das Trägersubstrat und die Dekorschicht aus dem gleichen Kunststoffgrundstoff bestehen, wobei der Kunststoff des Trägersubstrats vorzugsweise verstärkt ist, insbesondere glasfaserverstärkt ist. Hierdurch kann insbesondere ein Zweikomponenten-Spritzgussprozess weiter vereinfacht werden.

Darüber hinaus können der erste Kunststoff und der zweite Kunststoff identisch sein, vorzugsweise beide verstärkt durch ein Füllmaterial, wie beispielsweise Glasfasern. In diesem Fall wird bevorzugt, dass die Oberfläche der Dekorschicht genarbt ist. Es gibt andere Techniken zur Herstellung eines genarbten, Oberflächen nahen Betätigungselements, die oft gasunterstütztes Spritzgießen oder spezifische Konstruktion des Trägersubstrats erfordern, um massive Kunststoffanteile zu vermeiden, die zu Schrumpfungen führen, die sogar auf einer genarbten Oberfläche sichtbar wären. Diese neue Technik eines zweischichtigen (oder mehrschichtigen) Ansatzes macht es jedoch weniger notwendig oder sogar unnötig, gasunterstütztes Spritzgießen oder spezifische Designs des Trägersubstrats zu verwenden, da die Dekorschicht per se dünn genug ist, um ein Schrumpfen zu vermeiden, und in einem separaten Schuss geformt wird.

Die Dekorschicht kann eine andere Farbe besitzen als das Trägersubstrat. Hierdurch wird eine besonders große Designfreiheit erreicht. Die Dekorschicht und das Trägersubstrat können aber grundsätzlich auch die gleiche Farbe besitzen.

Die Dekorschicht und vorzugsweise der Sichtbereich der Dekorschicht kann nach einer weiteren Ausgestaltung aus einem Kunststoff mit Metalloptik bestehen. Solche Kunststoffe in Metalloptik, die insbesondere in Kunststoffspritzgussverfahren hergestellt werden können (Mold-In-Metal-Colour - MIMC) sind an sich bekannt. Sie besitzen eine einer Verchromung ähnliche Oberflächengüte ohne jedoch die umwelt- und gesundheitlichen Probleme der Verchromung aufzuweisen. Wie außerdem erläutert, besitzen gerade solche Kunststoffe mit Metalloptik häufig nicht die erforderliche Belastbarkeit. Dieses Problem wird durch den erfindungsgemäßen Aufbau des Betätigungselements gelöst.

Das Trägersubstrat kann nach einer weiteren Ausgestaltung zumindest bereichsweise aus einem Kunststoff mit Cool-Touch-Effekt bestehen.

In dem Kunststoff des Trägersubstrats können eine Mineralfüllung oder Metallpartikel, insbesondere ferromagnetische Metallpartikel, eingebettet sein. Durch das Einbetten einer Mineralfüllung oder von Metallpartikeln in den Kunststoff wird die üblicherweise mit Metalloberflächen assoziierte Kühle erreicht, obgleich ein Kunststoffmaterial eingesetzt wird, welches entsprechend auch in einem Kunststoffspritzgussprozess verarbeitet werden kann.

Beispielsweise kann das Trägersubstrat die von einem Fahrzeuginsassen zum Betätigen der Fahrzeugtür zu ergreifende, dem Fahrzeuginnenraum abgewandte Rückseite des Betätigungselements bilden. Indem diese aus einem Kunststoff mit Cool-Touch-Effekt gebildet ist, ergibt sich für einen Fahrzeuginsassen in Kombination mit einem Kunststoff in Metalloptik für den die dem Fahrzeuginnenraum zugewandte Vorderseite des Betätigungselements bildende Dekorschicht, und vorzugsweise den Sichtbereich der Dekorschicht, optisch und haptisch der Eindruck eines Metallgriffs.

Um den Cool-Touch-Effekt zu erhöhen, kann das Trägersubstrat aus einem Kunststoff mit guter Wärmeleitfähigkeit bestehen. Vorzugsweise zeigt ein Kunststoff im Rahmen dieser Erfindung den Cool-Touch-Effekt, wenn der mit dem dafür entwickelten Gerät "HapTemp" der Firma "ZIEGLER-Instruments GmbH" gemessene Wert gleich oder kleiner als 19, vorzugsweise gleich oder kleiner als 15 ist. Dieses Instrument ist in der Lage, ein Äquivalent der wahrgenommenen haptischen Temperatur zu messen, wobei Stahl einen Wert von 0, Glas einen Wert von 10, PTFE einen Wert von 20 aufweist. Diese Werte basieren auf einem "HapTemp" Gerät aus 2012 (Seriennr. 12.11.1), Software Version 16.2.8, zuletzt kalibriert im Januar 2019.

Nach einer weiteren Ausgestaltung kann in dem Trägersubstrat ein Hohlraum ausgebildet sein. Kunststoffe mit Cool-Touch-Effekt bzw. Kunststoffe mit darin eingebetteter Mineralfüllung oder Metallpartikeln besitzen eine hohe Dichte. Um dem entgegenzuwirken, kann in dem Trägersubstrat ein Hohlraum ausgebildet werden. Beispielsweise bei einem Kunststoffspritzgussprozess kann dies durch injiziert von Gas in den noch fließfähigen Kunststoff erreicht werden, um entsprechendes Material zu verdrängen. Das Ausbilden eines solchen Hohlraums wäre auch beispielsweise denkbar bei einem Kunststoff, wie PA6-GF30.

Gemäß einer weiteren Ausgestaltung kann die Dekorschicht und insbesondere der Sichtbereich der Dekorschicht in einem In-Mold-Painting Verfahren an das Trägersubstrat angebunden worden sein. Das In-Mold-Painting Verfahren wird in diesem Zusammenhang als Spritzgussverfahren behandelt. Die Herstellweise entspricht grundsätzlich dem zwei Komponenten Spritzgussverfahren, wobei die die Dekorschicht ausbildende Kavität des Spritzgusswerkzeugs von sehr geringer Dicke ist. Beispielsweise kann diese Kavität eine Dicke von weniger als 1 mm, vorzugsweise weniger als 0,3 mm besitzen. Die die Dekorschicht bildende Komponente (Farbe) wird nach dem Spritzgießen des Trägersubstrats in die Kavität für die Dekorschicht eingepresst und bildet nach dem Aushärten eine einer Lackierung ähnliche Oberfläche. Die Designfreiheit hinsichtlich der Farbe der Dekorschicht kann auf diese Weise bei hoher Oberflächenqualität weiter erhöht werden.

Die Erfindung löst die eingangs genannte Aufgabe auch durch ein Verfahren zum Herstellen einer erfindungsgemäßen Innentürgriffanordnung, wobei die Innentürgriffanordnung zumindest bereichsweise in einem Mehrkomponenten-Spritzgussverfahren, beispielsweise in einem Zweikomponenten-Spritzgussverfahren oder einem Dreikomponenten-Spritzgussverfahren, hergestellt wird. Wie bereits ausgeführt, können hierdurch in herstellungstechnisch einfacher Weise besonders hochwertige Oberflächen bei gleichzeitig hoher Belastbarkeit erzeugt werden.

Gemäß Ausführungsformen umfasst das Spritzgussverfahren das Herstellen eines Betätigungselements nach zumindest den folgenden Schritten:
A) Herstellen eines der folgenden:
   - eines Trägersubstrats aus einem ersten Kunststoff, und
   - einer Dekorschicht aus einem zweiten Kunststoff in einem ersten Spritzgussschuss unter Verwendung einer ersten Formhälfte und einer zweiten Formhälfte, die einen ersten Hohlraum definieren, was zu einem ersten Formling führt,
B) Herstellen des jeweils anderen von dem Trägersubstrat und der Dekorschicht in einem zweiten Spritzgussschuss auf den ersten Formling, vorzugsweise auf eine Außenfläche des ersten Formlings, nach einem Wechsel der ersten Formhälfte und/oder der zweiten Formhälfte, um einen zweiten Hohlraum zu definieren, was zu einem zweiten Formling führt, während der erste Formling in einer von der ersten Formhälfte und der zweiten Formhälfte verbleibt, bis der zweite Formling auf ihn geschossen worden ist, wobei der erste Formling vorzugsweise durch einen Schieber in dem jeweiligen Hohlraum gehalten wird, vorzugweise ein Schieber, der Bohrungen für eine Drehachse des Betätigungselements maskiert, oder durch eine hinterschnittene Geometrie des jeweiligen Hohlraums, wodurch dann das Teil vorzugsweise durch Zwangsendformen aus der Form ausgestoßen wird.

Hierdurch ist es möglich, Oberflächen und Trennlinien zwischen den beiden Kunststoffen derart zu gestalten, dass die optische Qualität der Dekorschicht verbessert wird. Vorzugsweise umfasst das Verfahren einen weiteren Werkzeugwechsel in einem dritten Spritzgussschuss, der einen dritten Bereich herstellt, und zwar durch Aufspritzen eines dritten Kunststoffs auf den ersten und/oder zweiten Formling, was zu einem dritten Formling führt. Der dritte Kunststoff ist vorzugsweise ein Material, welches weicher ist als der erste und/oder zweite Kunststoff und/oder den Cool-Touch-Effekt aufweist. Unter "Maskieren" wird hier bevorzugt verstanden, ein bestimmtes Volumen zu versperren, während unter "demaskieren" verstanden wird, ein versperrtes Volumen wieder freizugeben.

Gemäß einer Ausgestaltung des erfindungsgemäßen Herstellungsverfahrens ist oder soll die Dekorschicht zumindest teilweise direkt vom Fahrzeuginnenraum aus sichtbar und dem Fahrzeuginnenraum zugewandt sein, wobei das Betätigungselement eine dem Fahrzeuginnenraum zugewandte Vorderseite und eine dem Fahrzeuginnenraum abgewandte Rückseite aufweist, wobei vorzugsweise das Trägersubstrat im ersten Spritzgussschuss und die Dekorschicht im zweiten Spritzgussschuss hergestellt wird, wobei in dem einen von dem ersten Hohlraum und dem zweiten Hohlraum, welcher die Dekorschicht ausbilden soll, der zweite Kunststoff wie folgt einspritzt wird:
A) an einer Stelle, die zu einem Bereich der Rückseite des Betätigungselements werden soll, derart, dass der zweite Kunststoff entlang mindestens einer konkaven Formkante, vorzugsweise einer vorderen Kante, fließt, wenn er im Fahrzeug unterhalb der Kopfposition eines sitzenden Fahrers des Fahrzeugs installiert ist, oder entlang mindestens eines konkaven bogenförmigen Formbereichs zur Vorderseite des Betätigungsabschnitts hin, oder
B) an einer Stelle, die durch ein Gehäuse verdeckt ist, z.B. durch eine Gehäusewand zwischen dem Fahrzeuginnenraum und dieser Stelle, in der das Betätigungselement beweglich angeordnet sein soll.

Gemäß einer Ausgestaltung fließt der zweite Kunststoff um die mindestens eine Formkante oder dem mindestens einen bogenförmigen Formbereich über eine Breite von mindestens 5 mm, vorzugsweise mindestens 10 mm.

Hierdurch wird die Oberflächenqualität verbessert, da der Fluss des zweiten Kunststoffs besser ausgeglichen wird. Darüber hinaus ist es möglich, das Material des Trägersubstrats für zusätzliche Blickwinkel oder bei Betätigung des Betätigungselements zu verbergen.

Erfindungsgemäß ist bei dem Herstellungsverfahren insbesondere vorgesehen, dass die zweite Kunststoffschmelze zunächst durch einen Homogenisierungsbereich fließt, bevor diese dann den Sichtbereich der Dekorschicht ausbildet. Dieser Homogenisierungsbereich wird dadurch gebildet, dass sich beim Fluss der Kunststoffschmelze diese beruhigt und stetig in den Bereich der Kavität einfließt, die beim fertigen Betätigungselement zumindest den Sichtbereich der Dekorschicht ausbildet.

Hierdurch ist eine hochglänzende Oberfläche direkt aus der Form heraus erreichbar und durch die Verwendung des speziellen zwei Komponenten Designs gemäß der Erfindung ist keine weitere Oberflächenbehandlung erforderlich, um ein hochwertiges Erscheinungsbild zu erzielen.

Nachfolgend werden Ausführungsbeispiele der Erfindung anhand der beiliegenden Zeichnungen näher erläutert.

Es zeigen:
- FIG. 1: schematisch und in einer isometrischen Ansicht eine exemplarische Ausführungsform der erfindungsgemäßen Innentürgriffanordnung;
- FIG. 2: schematisch und in einer isometrischen Ansicht das Betätigungselement bzw. das Griffelement der Innentürgriffanordnung gemäß FIG. 1 in einer vergrößerten Darstellung;
- FIG. 3: schematisch und in einer Draufsicht auf die A-Seite einer exemplarischen Ausführungsform des erfindungsgemäßen Betätigungselements;
- FIG. 4: schematisch und in einer Schnittansicht die exemplarische Ausführungsform des erfindungsgemäßen Betätigungselements gemäß FIG. 3;
- FIG. 5A: schematisch und in einer Detailansicht eines Bereichs des Betätigungselements gemäß FIG. 4 zum Erläutern einer exemplarischen Ausführungsform des Angussbereichs;
- FIG. 5B: schematisch und in einer Draufsicht auf den Angussbereich bei der exemplarischen Ausführungsform gemäß FIG. 5A;
- FIG. 6A: schematisch und in einer Schnittansicht den Angussbereich eines Betätigungselements gemäß einer weiteren Ausführungsform der Erfindung; und
- FIG. 6B: schematisch und in einer Draufsicht auf den Angussbereich gemäß FIG. 6A.

Soweit nichts Anderes angegeben ist, bezeichnen in den Figuren gleiche Bezugszeichen gleiche Gegenstände.

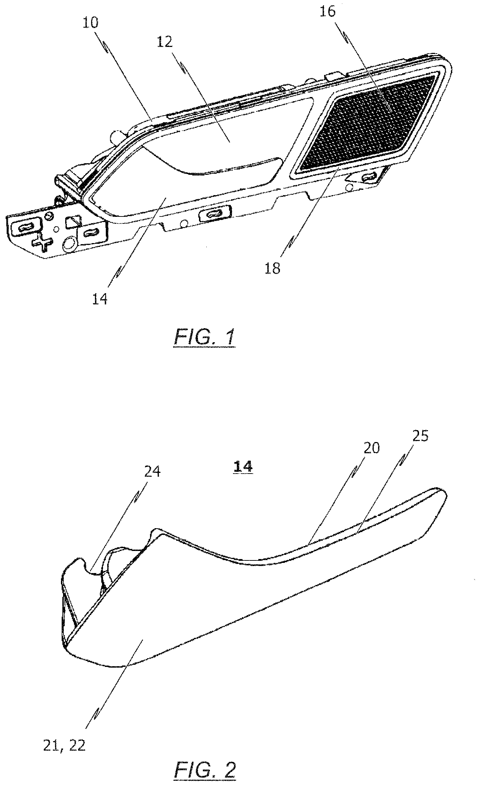

Die in FIG. 1 gezeigte Innentürgriffanordnung umfasst ein Gehäuse 10, mit dem sie an einer Tür eines Fahrzeugs, wie eines PKW oder LKW, befestigt werden kann.

Das Gehäuse 10 weist eine Griffmulde 12 auf, in der ein Betätigungselement 14, in dem vorliegenden Beispiel ein Griffelement 14, in der in FIG. 1 gezeigten Ruheposition aufgenommen ist. Aus dieser Ruheposition kann das Griffelement 14 um eine im montierten Zustand beispielsweise vertikale Schwenkachse mit seinem in FIG. 1 rechten freien Ende aus der Griffmulde 12 herausgeschwenkt werden. Über eine entsprechende Verbindung wird durch ein Herausschwenken des Griffelements 14 die Fahrzeugtür entriegelt, so dass diese anschließend von einem Fahrzeuginsassen geöffnet werden kann. Beim Herausschwenken des Griffelements 14 greift der Fahrzeuginsasse in die Griffmulde 12 ein und hintergreift das Griffelement 14. Das Griffelement 14 bildet in dem gezeigten Beispiel einen Griffhebel. In das Gehäuse 10 integriert ist außerdem ein Lautsprecher 16, der von einer Einfassung 18 umgeben ist.

In der vergrößerten Darstellung der FIG. 2 ist zu erkennen, dass das Griffelement 14 ein in der Ruheposition den Fahrzeuginnenraum abgewandtes Trägersubstrat 20 und eine dem Fahrzeuginnenraum zugewandte Dekorschicht, vorzugsweise Sichtbereich 22 aufweist.

Das Trägersubstrat 20 bildet die von einem Fahrzeuginsassen zu hintergreifende Rückseite des Griffelements 14 und der Sichtbereich 22 der Dekorschicht bildet die aus dem Fahrzeuginnenraum direkt sichtbare Vorderseite des Griffelements 14. Der Träger an seinem in FIG. 2 linken Ende weist Lagermittel 24 auf, mit denen das Griffelement 14 schwenkbar an dem Gehäuse 10 gelagert werden kann.

Der Sichtbereich 22 der Dekorschicht ist stoffschlüssig mit dem Trägersubstrat 20 verbunden. In dem gezeigten Beispiel ist der Sichtbereich 22 der Dekorschicht in einem Zweikomponenten-Spritzgussverfahren an dem Trägersubstrat angespritzt worden.

Das Trägersubstrat 20 besteht aus einem Kunststoff, beispielsweise einem verstärkten Kunststoff, wie einem glasfaserverstärktem Kunststoff. Er kann eine eingebettete Mineralfüllung oder eingebettete Metallpartikel, beispielsweise ferromagnetische Metallpartikel, aufweisen, so dass ein Fahrzeuginsasse beim Hintergreifen des Trägersubstrats 20 zum Herausschwenken des Griffelements 14 aus der Griffmulde 12 des Gehäuses 10 eine kühle Oberfläche und damit den Eindruck eines Metalls wahrnimmt.

Entsprechend kann der Sichtbereich 22 der Dekorschicht aus einem Kunststoff mit Metalloptik (Mold-In-Metal-Colour - MIMC) bestehen.

Der Sichtbereich 22 der Dekorschicht könnte aber auch aus anderen Kunststoffen bestehen, beispielsweise anders farbigen Kunststoffen oder dergleichen. Auch könnte der Sichtbereich 22 der Dekorschicht in einem In-Mold-Painting Verfahren stoffschlüssig mit dem Trägersubstrat 20 verbunden worden sein.

In dem gezeigten Beispiel ist auch die Einfassung 18 des Lautsprechers 16 in einem Zweikomponenten-Spritzgussverfahren in das Gehäuse 10 angespritzt worden. Die Einfassung 18 kann beispielsweise aus dem für den Sichtbereich 22 der Dekorschicht verwendeten Material bestehen.

Die Dekorschicht und insbesondere der Sichtbereich 22 der Dekorschicht ist dazu bestimmt, zumindest teilweise direkt vom Fahrzeuginnenraum aus sichtbar zu sein und dem Fahrzeuginnenraum zugewandt zu sein, wobei das Griffelement 14 eine Vorderseite, die dem Fahrzeuginnenraum zugewandt ist, und eine Rückseite aufweist, die dem Fahrzeuginnenraum abgewandt ist.

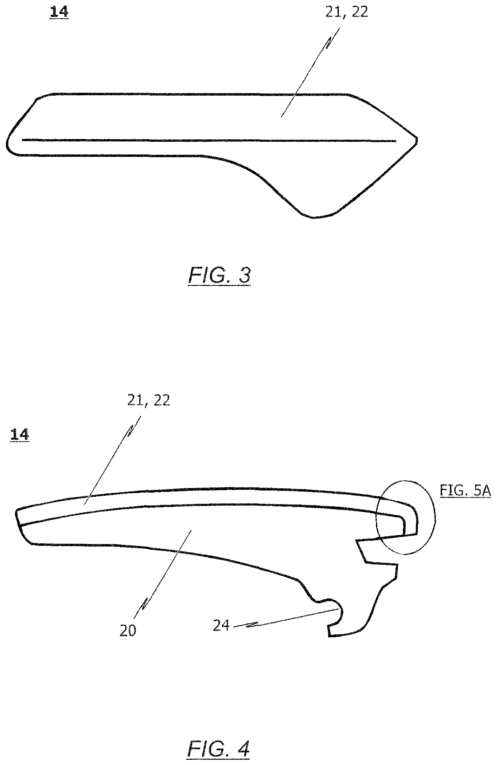

Nachfolgend wird unter Bezugnahme auf die Darstellungen in FIG. 3 bis FIG. 5B eine exemplarische Ausführungsform des erfindungsgemäßen Betätigungs- bzw. Griffelements 14 näher beschrieben.

Im Einzelnen zeigt FIG. 3 schematisch und in einer Draufsicht auf die A-Seite die exemplarische Ausführungsform des Betätigungs- bzw. Griffelements 14, während in FIG. 4 schematisch eine Längsschnittansicht des Betätigungs- bzw. Griffelements 14 gemäß FIG. 3 gezeigt ist.

Wie dargestellt, umfasst das erfindungsgemäße Betätigungs- bzw. Griffelement 14 ein Trägersubstrat 20 aus einem ersten Kunststoffmaterial sowie eine zumindest bereichsweise die Oberfläche des Trägersubstrats 20 bedeckende Dekorschicht 21. Dabei ist insbesondere vorgesehen, dass die Dekorschicht 21 nicht nur den Sichtbereich 22 (erkennbar in FIG. 3), sondern auch einen Randbereich 23 des Betätigungs- bzw. Griffelements 14 ausbildet.

Im Einzelnen ist der Randbereich 23 über einen Kantenbereich oder bogenförmigen Bereich 25 mit dem Sichtbereich 22 der Dekorschicht 21 verbunden, wie es der Schnittdarstellung in FIG. 4 entnommen werden kann.

Das Betätigungs- bzw. Griffelement 14 gemäß dieser exemplarischen Ausführungsform ist vorzugsweise in einem Zweikomponenten-Spritzgussverfahren hergestellt. Hierbei ist insbesondere vorgesehen, dass das Kunststoffmaterial der Dekorschicht 21 zumindest bereichsweise auf die Oberfläche des Trägersubstrats 20 aufgebracht und mit dem Trägersubstrat 20 stoffschlüssig verbunden ist.

Zur Herstellung des Betätigungs- bzw. Griffelements 14 und insbesondere zum Ausbilden der Dekorschicht 21 auf den Bereichen der Oberfläche des Trägersubstrats 20 ist insbesondere vorgesehen, dass das Kunststoffmaterial der Dekorschicht 21 als erhitzte Spritzgussmasse über Angusskanäle in einen entsprechenden Formhohlraum eingespritzt wird, wobei dieser Formhohlraum bereichsweise von dem Trägersubstrat 20 und mindestens einer Werkzeugplatte (nicht in den Zeichnungen dargestellt) begrenzt wird.

Hierzu kommt ein Spritzgießwerkzeug zum Einsatz, welches mindestens einen Verteilerkanal aufweist, der zu einem Angussbereich 2 führt. Insbesondere ist bei der erfindungsgemäßen Lösung mindestens ein Punktanguss vorgesehen, um die Dekorschicht 21 auf dem Trägersubstrat 20 zumindest bereichsweise auszubilden.

Wie es nachfolgend näher beschrieben wird, ist bei der erfindungsgemäßen Lösung insbesondere ein Unterflur-Angusssystem, wie beispielsweise der sogenannte Bananenanguss, zum Ausbilden der Dekorschicht 21 auf dem Trägersubstrat 20 vorgesehen, wobei das Anspritzen der Dekorschicht 21 derart erfolgt, dass in dem Formhohlraum, der der Dekorschicht 21 entspricht, die erhitzte Spritzgussmasse des Kunststoffmaterials der Dekorschicht 21 homogenisiert und strömungsmäßig beruhigt wird, bevor die erhitzte Spritzgussmasse den Bereich des Formhohlraums erreicht, der bei dem fertiggestelltem Betätigungs- bzw. Griffelement 14 dem Sichtbereich 22 entspricht.

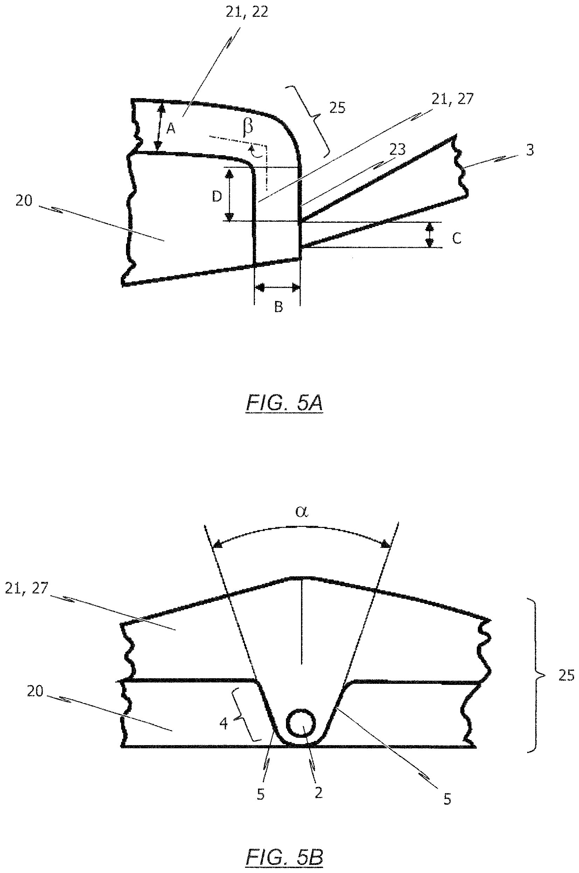

Eine exemplarische Ausführungsform für ein mögliches Angießen wird nachfolgend unter Bezugnahme auf die schematischen Zeichnungen in FIG. 5A und in FIG. 5B beschrieben.

Im Einzelnen ist in FIG. 5A schematisch der in FIG. 4 gezeigte Kanten- bzw. Bogenbereich 25 in einer vergrößerten Darstellung gezeigt, und zwar zusammen mit einem Angusskanal 3 des Spritzgießwerkzeugs. Der Angusskanal 3 mündet dabei in einem Bereich des Formhohlraums, der beim fertiggestellten Betätigungs- bzw. Griffelement 14 nicht zur A-Seite des Betätigungs- bzw. Griffelements 14 gehört. Vielmehr mündet der Angusskanal 3 in einem Seiten- bzw. Randbereich 23, der über den Kanten- oder Bogenbereich 25 mit dem Sichtbereich 22 des Betätigungs- bzw. Griffelements 14 verbunden ist.

Vorzugsweise weist - wie es der schematischen Schnittansicht in FIG. 5A entnommen werden kann - der Angusskanal 3 eine in Richtung des Angussbereichs 2 konvergierende Querschnittsformgebung auf, so dass die erhitzte Spritzgussschmelze des Kunststoffmaterials für die Dekorschicht 21 entsprechend in den Seiten- bzw. Randbereich 23 des Formhohlraums eingespritzt werden kann.

In FIG. 5B ist in einer Draufsicht schematisch der Angussbereich 2 des Angusskanals 3 gemäß FIG. 5A gezeigt.

Kurz zusammengefasst ist ersichtlich, dass der Angussbereich 2 in einer Angusslippe oder Angusslasche 4 ausgebildet ist, wobei der Angussbereich 2 mit dem Sichtbereich 22 der Dekorschicht 21 über den Kanten- oder Bogenbereich 25 stetig verbunden ist.

Insbesondere ist es hierbei von Vorteil, dass die Angusslippe oder Angusslasche 4, in welcher der Angussbereich 2 ausgebildet ist, in einer Draufsicht (vgl. FIG. 5B) eine zumindest im Wesentlichen U-förmige, V-förmige oder keilförmige Gestaltung aufweist. Dabei verjüngt sich die Angusslippe oder Angusslasche 4 von dem Kantenbereich oder bogenförmigen Bereich 25 in Richtung des Angussbereichs 2.

Mit anderen Worten, in der in FIG. 5B gezeigten Draufsicht auf die Angusslippe oder Angusslasche 4 weist die Angusslippe oder Angusslasche 4 zwei in Richtung des Kanten- oder Bogenbereichs 25 zueinander divergierende und an das Trägersubstrat 20 angrenzende Grenzlinien 5 auf, wobei im Bereich des Angussbereichs 2 die beiden Grenzlinien 5 insbesondere in einer stetigen Weise zusammenlaufen.

Durch diese Ausgestaltung des Angussbereichs 2 wird in einer wirksamen Weise in dem Formhohlraum, der der Dekorschicht 21 entspricht, ein entsprechender Homogenisierungsbereich ausgebildet. In vorteilhafter Weise ist dabei vorgesehen, dass zwischen den in Richtung des Kanten- oder Bogenbereichs 25 divergierenden Grenzlinien 5 ein Winkel α aufgespannt ist, wobei dieser Winkel zwischen 10° und 90° liegt.

Selbstverständlich kommen hier aber auch andere Winkelbereiche in Frage.

Der Kanten- bzw. Bogenbereich 25 zwischen dem Angussbereich 2 und dem Sichtbereich 22 der Dekorschicht 21 ist derart gewählt, dass die Dekorschicht 21 von dem Angussbereich 2 zu dem Sichtbereich 22 vorzugsweise in stetiger Weise um einen Winkel β von mindestens 35° und vorzugsweise um mindestens 45° umgelenkt wird.

Bei der in FIG. 5A und 5B gezeigten Ausführungsform ist die Angusslippe bzw. die Angusslasche 4 in einem Bereich der Dekorschicht 21 ausgebildet, der über einen einzigen Kanten- bzw. Bogenbereich 25 in einer stetigen Weise mit dem Sichtbereich 22 der Dekorschicht 21 verbunden ist, wobei über den Kantenbereich oder bogenförmigen Bereich 25 die Dekorschicht 21 von dem Angussbereich 2 zu dem Sichtbereich 22 um einen Winkel β mindestens 35° umgelenkt wird. Dabei ist der Angussbereich 2 über einen vorzugsweise geradlinigen Tunnelanguss (Angusskanal 3) gebildet.

Zur Ausbildung eines entsprechenden Homogenisierungsbereichs im Formhohlraum, der der Dekorschicht 21 des Betätigungs- bzw. Griffelements 14 entspricht, ist vorzugsweise vorgesehen, dass der Bereich der Dekorschicht 21, in welchem die Angusslippe oder Angusslasche 4 ausgebildet ist, zumindest beim Kantenbereich oder bogenförmigen Bereich 25 eine erste Schichtdicke B aufweist, wobei der Bereich der Dekorschicht 21, in welchem der Sichtbereich 22 ausgebildet ist, zumindest beim Kantenbereich oder bogenförmigen Bereich 25 eine mittlere zweite Schichtdicke A aufweist.

Insbesondere ist dabei vorgesehen, dass zumindest beim Kantenbereich oder bogenförmigen Bereich 25 die erste Schichtdicke B kleiner als die zweite Schichtdicke A ist. Zumindest beim Kantenbereich oder bogenförmigen Bereich 25 beträgt gemäß bevorzugten Ausführungsformen die zweite Schichtdicke A vorzugsweise 0,5 mm bis 3,5 mm, während die erste Schichtdicke B vorzugsweise 0,4 mm bis 3,3 mm beträgt.

Des Weiteren ist es im Hinblick auf eine möglichst effiziente Homogenisierung der Schmelze des zweiten Kunststoffmaterials beim Einschießen in den Formhohlraum von Vorteil, dass der Angussbereich 2 vorzugsweise zumindest im Wesentlichen rund oder oval ausgebildet ist (vgl. die Draufsicht in FIG. 5B) und einen mittleren Durchmesser C aufweist, wie es in FIG. 5A angedeutet ist.

Der mittlere Durchmesser C des Angussbereichs 2 sollte dabei kleiner als die Schichtdicke B des Bereichs der Dekorschicht 21 sein, in welchem die Angusslippe oder Angusslasche 4 ausgebildet ist.

Gemäß denkbaren Realisierungen des erfindungsgemäßen Betätigungs- bzw. Griffelements 14 beträgt der mittlere Durchmesser C des Angussbereichs 2 vorzugsweise 0,3 mm bis 3,1 mm, während die Schichtdicke B des Bereichs der Dekorschicht 21, in welchem die Angusslippe oder Angusslasche 4 ausgebildet ist, vorzugsweise 0,4 mm bis 3,3 mm beträgt. Selbstverständlich sind aber auch andere Dimensionen für die entsprechenden Durchmesser bzw. Schichtdicken denkbar.

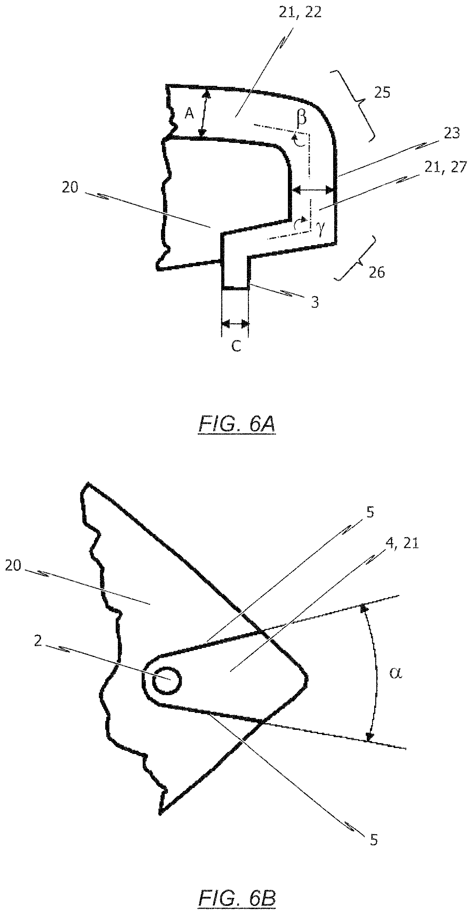

In FIG. 6A und FIG. 6B ist eine alternative Ausführungsform des erfindungsgemäßen Betätigungs- bzw. Griffelements 14 gezeigt.

Wie auch die zuvor unter Bezugnahme auf die Darstellungen in FIG. 3 bis FIG. 5B gezeigte Ausführungsform ist bei der in FIG. 6A gezeigten Ausführungsform der Angussbereich 2 für die Dekorschicht 21 in einem Bereich des entsprechenden Formhohlraums vorgesehen, der verschieden von dem Sichtbereich 22 der Dekorschicht 21 ist.

Insbesondere ist bei der in FIG. 6A gezeigten Ausführungsform vorgesehen, dass das zweite Kunststoffmaterial der Dekorschicht 21 über einen Bananenanguss 6 in den entsprechenden Formhohlraum eingeschossen wird.

Die in FIG. 6A gezeigte Ausführungsform unterscheidet sich von der in FIG. 5A gezeigten Ausführungsform insbesondere dadurch, dass der Angussbereich 2 in einer Angusslippe bzw. Angusslasche 4 ausgeführt ist, die in einem Bereich der Dekorschicht 21 ausgebildet ist, der über einen ersten Kanten- bzw. Bogenbereich 26 mit einem Zwischenbereich 27 der Dekorschicht 21 verbunden ist, wobei der Zwischenbereich 27 der Dekorschicht 21 über einen zweiten Kanten- bzw. Bogenbereich 25 vorzugsweise in stetiger Weise mit dem Sichtbereich 22 der Dekorschicht 21 verbunden ist. Durch das Vorsehen eines derartigen Zwischenbereichs 27 kann eine besonders effiziente Homogenisierung der Kunststoffschmelze beim Einschießen dieser in den Formhohlraum bewirkt werden.

Der erste Kanten- bzw. Bogenbereich 26 ist vorzugsweise derart ausgebildet, dass im ersten Kantenbereich oder bogenförmigen Bereich 26 die Dekorschicht 21 um einen Winkel γ von mindestens 45° und vorzugsweise um einen Winkel γ von etwa 90° umgelenkt wird, wobei im zweiten Kanten- bzw. Bogenbereich 25 der Dekorschicht 21 die Dekorschicht 21 um einen Winkel β von 35° und um einen Winkel β von maximal 155° umgelenkt wird.

In FIG. 6B ist in einer Draufsicht die Angusslippe bzw. Angusslasche 4 des Angussbereichs 2 der exemplarischen Ausführungsform gemäß FIG. 6A gezeigt.

Wie auch bei der in FIG. 5B schematisch gezeigten Angusslippe bzw. Angusslasche 4 ist es bei der Ausführungsform gemäß FIG. 6B vorgesehen, dass die Angusslippe oder Angusslasche 4, in welcher der Angussbereich 2 ausgebildet ist, in einer Draufsicht eine zumindest im Wesentlichen U-förmige, V-förmige oder keilförmige Gestaltung aufweist, wobei sich die Angusslippe oder Angusslasche 4 von dem ersten Kanten- bzw. Bogenbereich 26 in Richtung des Angussbereichs 2 hin verjüngt.

Im Einzelnen weist in einer Draufsicht auf die Angusslippe oder Angusslasche 4 (vgl. FIG. 6B) die Angusslippe oder Angusslasche 4 zwei in Richtung des ersten Kanten- bzw. Bogenbereichs 26 zueinander divergierende und an das Trägersubstrat 20 angrenzende Grenzlinien 5 auf, welche im Bereich des Angussbereichs 2 in einer stetigen Weise zusammenlaufen.

Ebenfalls ist es bei dieser Ausführungsform bevorzugt, dass zwischen den in Richtung des ersten Kanten- bzw. Bogenbereichs 26 divergierenden Grenzlinien 5 ein Winkel α aufgespannt ist, wobei dieser Winkel zwischen vorzugsweise 10° und 90° liegt.

Das Betätigungs- bzw. Griffelement 14 wird vorzugsweise in einem Mehrkomponenten-Spritzgussverfahren durch die folgenden Schritte hergestellt:
A) Herstellen des Trägersubstrats 20 des ersten Kunststoffs in einem ersten Spritzgussschuss unter Verwendung einer ersten Formhälfte und einer zweiten Formhälfte, die einen ersten Hohlraum definieren, was zu einem ersten Formling führt;
B) Herstellen der Dekorschicht 21 in einem zweiten Spritzgussschuss auf den ersten Formling auf eine Außenfläche des ersten Formlings nach einem Wechsel der zweiten Formhälfte, um einen zweiten Hohlraum zu definieren, was zu einem zweiten Formling führt, während der erste Formling in der ersten Formhälfte verbleibt, bis der zweite Formling auf ihn geschossen worden ist. Der erste Formling wird dabei vorzugsweise in dem entsprechenden Hohlraum durch einen Schieber gehalten, der beispielsweise die Löcher für eine Drehachse des Griffelements abdeckt.

Bei dem zweiten Spritzgussschuss wird die erhitzte Spritzgussmasse des zweiten Kunststoffs zunächst in einen Homogenisierungsbereich in dem durch den ersten Formling und der zweiten Formhälfte definierten Formhohlraum eingespritzt, wobei dieser Homogenisierungsbereich so gewählt ist, dass eine Homogenisierung der Schmelze und eine strömungsmäßige Beruhigung der Schmelze erfolgt.

Anschließend fließt die Kunststoffschmelze über den mindestens eine Kanten- oder Bogenbereich 25 zur Sichtseite des Betätigungselements, wodurch die Kunststoffschmelze der Sichtbereich 22 gebildet wird.

Mit der Erfindung ist insbesondere ein Innentürgriff/Verfahren zum Herstellen eines solchen Türgriffs (Betätigungselement) vorgestellt worden. Dieser weist mindestens zwei Kunststoffschichten auf, und zwar eine erste Kunststoffschicht, die durch das Trägersubstrat 20 gebildet wird, und eine zweite Kunststoffschicht, die durch die Dekorschicht 21 gebildet wird, wobei beide Kunststoffschichten mittels Spritzgießen verbunden sind. Die erste Schicht bildet eine rückseitige Oberfläche und die zweite Schicht bildet eine sichtbare vorderseitige Oberfläche des Betätigungs- bzw. Griffelements 14 aus.

Es wird bevorzugt, dass die erste Schicht durch einen ersten Werkzeughohlraum geformt wird, wobei die zweite Schicht unter Verwendung eines modifizierten Werkzeughohlraums auf die erste Schicht geformt wird, während die erste Schicht in einem Bereich des ersten Hohlraums verbleibt.

Indem die zweite Schicht derart in den Werkzeughohlraum eingespritzt wird, dass zunächst eine Homogenisierung der Kunststoffschmelze erfolgt, bevor diese zum sichtbaren Bereich des Betätigungselements/Griffelements fließt, ist eine Oberflächenstruktur des sichtbaren Bereichs von besonderer Qualität erzielbar.

Die Erfindung ist nicht auf die in den Zeichnungen gezeigten Ausführungsformen beschränkt, sondern ergibt sich aus einer Zusammenschau sämtlicher hierin offenbarter Merkmale.

### Bezugszeichenliste

- 2: Angussbereich
- 3: Angusskanal
- 4: Angusslippe/Angusslasche
- 5: Grenzlinie
- 6: Bananenanguss
- 10: Gehäuse
- 12: Griffmulde
- 14: Betätigungselement/Griffelement
- 16: Lautsprecher
- 18: Einfassung
- 20: Trägersubstrat
- 21: Dekorschicht
- 22: Sichtbereich der Dekorschicht
- 23: Randbereich der Dekorschicht
- 24: Lagermittel
- 25: Kantenbereich/bogenförmiger Bereich
- 26: Kantenbereich/bogenförmiger Bereich
- 27: Zwischenbereich der Dekorschicht

## Patentansprüche

1. Betätigungselement (14), insbesondere Griffelement, einer Innentürgriffanordnung eines Fahrzeugs, wobei das Betätigungselement (14) ein Trägersubstrat (20) vorzugsweise aus Kunststoff und eine zumindest bereichsweise die Oberfläche des Trägersubstrats (20) bedeckende Dekorschicht (21) aufweist, wobei die Dekorschicht (21) Folgendes aufweist:
- einen Sichtbereich (22), der insbesondere im bestimmungsgemäßen Einbauzustand des Betätigungselements (14) und ferner insbesondere im nicht betätigten Zustand des Betätigungselements (14) eine Sichtseite des Betätigungselements (14) bildet;
- mindestens einen in einer Angusslippe oder Angusslasche (4) ausgebildeten Angussbereich (2); und
- mindestens einen Kantenbereich oder bogenförmigen Bereich (25, 26), über den der Angussbereich (2) mit dem Sichtbereich (22) der Dekorschicht (21) vorzugsweise in einer stetigen Weise verbunden ist.

2. Betätigungselement (14) nach Anspruch 1,
wobei die Angusslippe oder Angusslasche (4), in welcher der mindestens eine Angussbereich (2) ausgebildet ist, in einer Draufsicht eine zumindest im Wesentlichen U-förmige, V-förmige oder keilförmige Gestaltung aufweist, und wobei sich die Angusslippe oder Angusslasche (4) von dem mindestens einen Kantenbereich oder bogenförmigen Bereich (25, 26) in Richtung des mindestens einen Angussbereiches (2) hin verjüngt; und/oder wobei die Angusslippe oder Angusslasche (4), in welcher der mindestens eine Angussbereich (2) ausgebildet ist, vorzugsweise in einem Endbereich des Betätigungselements (14) und insbesondere in einem konvergierenden Bereich des Betätigungselements (14) ausgebildet ist.

3. Betätigungselement (14) nach Anspruch 1 oder 2,
wobei in einer Draufsicht auf die Angusslippe oder Angusslasche (4) die Angusslippe oder Angusslasche (4) zwei in Richtung des mindestens einen Kantenbereiches oder bogenförmigen Bereiches (25, 26) zueinander divergierende und an das Trägersubstrat (20) angrenzende Grenzlinien (5) aufweist, welche im Bereich des mindestens einen Angussbereichs (2) insbesondere in einer stetigen Weise und vorzugsweise über mindestens einen und insbesondere zwei Kurvenbereiche mit konstanter Krümmung zusammenlaufen.

4. Betätigungselement (14) nach Anspruch 3,
wobei zwischen den in Richtung des mindestens einen Kantenbereiches oder bogenförmigen Bereiches (25, 26) divergierenden Grenzlinien (5) ein Winkel α aufgespannt ist, wobei vorzugsweise 90° > α > 10° gilt; und/oder
wobei die divergierenden Grenzlinien (5) jeweils über einen Kurvenbereich mit konstanter und insbesondere gleicher Krümmung in den mindestens einen Kantenbereich oder bogenförmigen Bereich (25, 26) übergehen, wobei die Krümmung des Kurvenbereiches, über den die divergierenden Grenzlinien (5) jeweils in den mindestens einen Kantenbereich oder bogenförmigen Bereich (25, 26) übergehen, vorzugsweise der Krümmung des mindestens einen Kurvenbereiches entspricht, über den die an das Trägersubstrat (20) angrenzenden Grenzlinien (5) zusammenlaufen.

5. Betätigungselement (14) nach einem der Ansprüche 1 bis 4,
wobei der mindestens eine Kantenbereich oder bogenförmige Bereich (25, 26) zwischen dem mindestens einen Angussbereich (2) und dem Sichtbereich (22) der Dekorschicht (21) derart gewählt ist, dass die Dekorschicht (21) von dem mindestens einen Angussbereich (2) zu dem Sichtbereich (22) vorzugsweise in einer stetigen Weise um einen Winkel β von mindestens 35° und noch bevorzugter in einer stetigen Weise um einen Winkel β von mindestens 45° umgelenkt wird; und/oder wobei der mindestens eine Kantenbereich oder bogenförmige Bereich (25, 26) zwischen dem mindestens einen Angussbereich (2) und dem Sichtbereich (22) der Dekorschicht (21) derart gewählt ist, dass die Dekorschicht (21) von dem Angussbereich (2) zu dem Sichtbereich (22) vorzugsweise in einer stetigen Weise um einen Winkel β von maximal 155° und noch bevorzugter in einer stetigen Weise um einen Winkel β von maximal 145° umgelenkt wird.

6. Betätigungselement (14) nach einem der Ansprüche 1 bis 5,
wobei die Angusslippe oder Angusslasche (4) in einem Bereich der Dekorschicht (21) ausgebildet ist, der über einen einzigen Kantenbereich oder bogenförmigen Bereich (25) vorzugsweise in einer stetigen Weise mit dem Sichtbereich (22) der Dekorschicht (21) verbunden ist, wobei über den einzigen Kantenbereich oder bogenförmigen Bereich (25) die Dekorschicht (21) von dem Angussbereich (2) zu dem Sichtbereich (22) um einen Winkel β von vorzugsweise mindestens 35° und vorzugsweise maximal um 155° umgelenkt wird, und wobei der Angussbereich (2) vorzugsweise über einen geradlinigen Tunnelanguss (3) gebildet ist.

7. Betätigungselement (14) nach Anspruch 6,
wobei der Bereich der Dekorschicht (21), in welchem die Angusslippe oder Angusslasche (4) ausgebildet ist, zumindest beim Kantenbereich oder bogenförmigen Bereich (25) eine erste mittlere Schichtdicke B aufweist, und wobei der Bereich der Dekorschicht (21), in welchem der Sichtbereich (22) ausgebildet ist, zumindest beim Kantenbereich oder bogenförmigen Bereich (25) eine zweite mittlere Schichtdicke A aufweist, wobei die erste mittlere Schichtdicke B kleiner als die zweite mittlere Schichtdicke A ist, wobei die zweite mittlere Schichtdicke A vorzugsweise 0,5 mm bis 3,5 mm beträgt und/oder wobei die erste mittlere Schichtdicke B vorzugsweise 0,4 mm bis 3,3 mm beträgt.

8. Betätigungselement (14) nach Anspruch 6 oder 7,
wobei der Angussbereich (2) vorzugsweise zumindest im Wesentlichen rund oder oval ausgebildet ist und einen mittleren Durchmesser C aufweist, wobei der mittlere Durchmesser C des Angussbereichs (2) kleiner als die mittlere Schichtdicke B des Bereichs der Dekorschicht (21) ist, in welchem die Angusslippe oder Angusslasche (4) ausgebildet ist, wobei der mittlere Durchmesser C des Angussbereichs (2) vorzugsweise 0,3 mm bis 3,1 mm beträgt und/oder wobei die mittlere Schichtdicke B des Bereichs der Dekorschicht (21), in welchem die Angusslippe oder Angusslasche (4) ausgebildet ist, vorzugsweise 0,4 mm bis 3,3 mm beträgt.

9. Betätigungselement (14) nach einem der Ansprüche 6 bis 8,
wobei die Angusslippe oder Angusslasche (4) über einen Zwischenbereich (27) in den Sichtbereich (22) der Dekorschicht (21) übergeht, wobei zwischen dem Zwischenbereich (27) und dem Sichtbereich (22) der einzige Kantenbereich oder bogenförmige Bereich (25) angeordnet ist, wobei im Bereich der Angusslippe oder Angusslasche (4) und im Zwischenbereich (27) die Dekorschicht (21) eine mittlere Schichtdicke B aufweist, wobei die mittlere Schichtdicke B vorzugsweise 0,4 mm bis 3,3 mm beträgt.

10. Betätigungselement (14) nach Anspruch 9,
wobei der Zwischenbereich (27) eine mittlere Länge D aufweist, die größer als mittlere Schichtdicke A der Dekorschicht (21) im Sichtbereich (22) ist, wobei die Dekorschicht (21) im Sichtbereich (22) eine mittlere Schichtdicke von vorzugsweise 0,5 mm bis 3,5 mm aufweist.

11. Betätigungselement (14) nach einem der Ansprüche 1 bis 5,
wobei die Angusslippe oder Angusslasche (4) in einem Bereich der Dekorschicht (21) ausgebildet ist, der über einen ersten Kantenbereich oder bogenförmigen Bereich (26) mit einem Zwischenbereich (27) der Dekorschicht (21) verbunden ist, wobei der Zwischenbereich (27) der Dekorschicht (21) über einen zweiten Kantenbereich oder bogenförmigen Bereich (25) vorzugsweise in stetiger Weise mit dem Sichtbereich (22) der Dekorschicht (21) verbunden ist, wobei im ersten Kantenbereich oder bogenförmigen Bereich (26) die Dekorschicht (21) um einen Winkel γ von mindestens 45° und vorzugsweise um einen Winkel γ von etwa 90° umgelenkt wird, und wobei im zweiten Kantenbereich oder bogenförmigen Bereich (25) der Dekorschicht (21) die Dekorschicht (21) um einen Winkel β von vorzugsweise mindestens 35° und vorzugsweise maximal 155° umgelenkt wird.

12. Betätigungselement (14) nach Anspruch 11,
wobei der Zwischenbereich (27) der Dekorschicht (21) eine mittlere Schichtdicke B aufweist, und wobei der Sichtbereich (22) der Dekorschicht (21) zumindest beim Kantenbereich oder bogenförmigen Bereich (25) eine mittlere Schichtdicke A aufweist, wobei die mittlere Schichtdicke B des Zwischenbereichs (27) der Dekorschicht (21) kleiner als die mittlere Schichtdicke A des Sichtbereichs der Dekorschicht (21) ist, wobei die mittlere Schichtdicke B des Zwischenbereichs (27) der Dekorschicht (21) zumindest beim Kantenbereich oder bogenförmigen Bereich (25) vorzugsweise in einem Bereich zwischen 0,3 mm bis 3,5 mm liegt und wobei die mittlere Schichtdicke A des Sichtbereichs der Dekorschicht (21) zumindest beim Kantenbereich oder bogenförmigen Bereich (25) vorzugsweise in einem Bereich zwischen 0,4 mm bis 3,7 mm liegt.

13. Betätigungselement (14) nach Anspruch 12,
wobei der Angussbereich (2) vorzugsweise zumindest im Wesentlichen rund oder oval ausgebildet ist und einen mittleren Durchmesser C aufweist, wobei der mittlere Durchmesser C des Angussbereichs (2) kleiner als die mittlere Schichtdicke B des Zwischenbereichs (27) der Dekorschicht (21) ist, wobei der mittlere Durchmesser C des Angussbereichs (2) vorzugsweise in einem Bereich zwischen 0,2 mm bis 3,4 mm liegt.

14. Betätigungselement (14) nach einem der Ansprüche 1 bis 13,
wobei die Dekorschicht (21) aus einem Kunststoffmaterial mit eingelagerten Pigmenten gebildet ist.

15. Verfahren zur Herstellung eines Betätigungs- bzw. Griffelements (14), insbesondere eines Betätigungs- bzw. Griffelements (14) nach einem der Ansprüche 1 bis 14, vorzugsweise in einem Mehrkomponenten-Spritzgussverfahren,
wobei das Verfahren die folgenden Verfahrensschritte aufweist:
A) Herstellen eines Trägersubstrats (20) aus einem ersten Kunststoff in einem ersten Spritzgussschuss unter Verwendung einer ersten Formhälfte und einer zweiten Formhälfte, die einen ersten Hohlraum definieren, was zu einem ersten Formling führt; und
B) Herstellen einer Dekorschicht (21) in einem zweiten Spritzgussschuss auf den ersten Formling auf eine Außenfläche des ersten Formlings nach einem Wechsel der zweiten Formhälfte, um einen zweiten Hohlraum zu definieren, was zu einem zweiten Formling führt, während der erste Formling in der ersten Formhälfte verbleibt, bis der zweite Formling auf ihn geschossen worden ist,
oder wobei das Verfahren die folgenden Verfahrensschritte aufweist:
A) Herstellen einer Dekorschicht (21) aus einem ersten Kunststoff in einem ersten Spritzgussschuss unter Verwendung einer ersten Formhälfte und einer zweiten Formhälfte, die einen ersten Hohlraum definieren, was zu einem ersten Formling führt; und
B) Herstellen eines Trägersubstrats (20) in einem zweiten Spritzgussschuss auf den ersten Formling auf eine Außenfläche des ersten Formlings nach einem Wechsel der zweiten Formhälfte, um einen zweiten Hohlraum zu definieren, was zu einem zweiten Formling führt, während der erste Formling in der ersten Formhälfte verbleibt, bis der zweite Formling auf ihn geschossen worden ist,
wobei bei dem zweiten Spritzgussschuss die erhitzte Spritzgussmasse des zweiten Kunststoffs zunächst in einen Homogenisierungsbereich in dem durch den ersten Formling und der zweiten Formhälfte definierten Formhohlraum eingespritzt wird, wobei der Homogenisierungsbereich durch mindestens einen in einer Angusslippe oder Angusslasche (4) ausgebildeten Angussbereich (2) und durch mindestens einen Kantenbereich oder bogenförmigen Bereich (25, 26), über den der Angussbereich (2) mit einem Sichtbereich (22) der Dekorschicht (21) vorzugsweise in einer stetigen Weise verbunden ist, gebildet ist, und wobei der Homogenisierungsbereich eine Homogenisierung der Schmelze und eine strömungsmäßige Beruhigung der Schmelze bewirkt.

## Claims

1. An actuating member (14), in particular a handle element, of an interior door handle arrangement of a vehicle, wherein the actuating member (14) comprises a carrier substrate (20) preferably made of plastic and a decorative layer (21) at least regionally covering the surface of the carrier substrate (20), wherein the decorative layer (21) comprises:
- a visible region (22) which, in particular in the intended installed state of the actuating member (14) and further in particular in the non-actuated state of the actuating member (14), forms a visible side of the actuating member (14);
- at least one sprue region (2) formed in a sprue lip or sprue tab (4); and
- at least one edge region or arcuate region (25, 26) by which the sprue region (2) is preferably continuously connected to the visible region (22) of the decorative layer (21).

2. The actuating member (14) according to claim 1,
wherein the sprue lip or sprue tab (4), in which the at least one sprue region (2) is formed, as seen in a top view, has an at least substantially U-shaped, V-shaped or wedge-shaped design, and wherein the sprue lip or sprue tab (4) tapers from the at least one edge region or arcuate region (25, 26) towards the at least one sprue region (2); and/or
wherein the sprue lip or sprue tab (4), in which the at least one sprue region (2) is formed, is preferably formed in an end region of the actuating member (14), and in particular in a converging region of the actuating member (14) .

3. The actuating member (14) according to claim 1 or 2,
wherein, as seen in a top view onto the sprue lip or sprue tab (4), the sprue lip or sprue tab (4) has two boundary lines (5) diverging in relation to each other towards the at least one edge region or arcuate region (25, 26) and adjacent to the carrier substrate (20) that converge in the region of the at least one sprue region (2), in particular in a continuous manner and preferably over at least one and in particular two curved regions with constant curvature.

4. The actuating member (14) according to claim 3,
wherein an angle α is spanned between the diverging boundary lines (5) in the direction of the at least one edge region or arcuate region (25, 26), wherein preferably 90° > α > 10° applies; and/or
wherein each of the diverging boundary lines (5) comprises a curved region with a constant and in particular the same curvature into the at least one edge region or arcuate region (25, 26), wherein the curvature of the curved region, by the diverging boundary lines (5) each transition into the at least one edge region or arcuate region (25, 26), preferably corresponds to the curvature of the at least one arcuate region by which the boundary lines (5) adjacent to the carrier substrate (20) converge.

5. The actuating member (14) according to any one of claims 1 to 4,
wherein the at least one edge region or arcuate region (25, 26) between the at least one sprue region (2) and the visible region (22) of the decorative layer (21) is selected such that the decorative layer (21) is preferably continuously redirected from the at least one sprue region (2) to the visible region (22) by an angle β of at least 35° and more preferably continuously redirected by an angle β of at least 45°; and/or
wherein the at least one edge region or arcuate region (25, 26) between the at least one sprue region (2) and the visible region (22) of the decorative layer (21) is selected such that the decorative layer (21) is preferably continuously redirected from the sprue region (2) to the visible region (22) by an angle β not to exceed 155° and more preferably continuously redirected by an angle β not to exceed 145°.

6. The actuating member (14) according to any one of claims 1 to 5,
wherein the sprue lip or sprue tab (4) is formed in a region of the decorative layer (21) that is preferably continuously connected to the visible region (22) of the decorative layer (21) by a single edge region or arcuate region (25), wherein the decorative layer (21) is redirected from the sprue region (2) to the visible region (22) by the only edge region or arcuate region (25) by an angle β of preferably at least 35° and preferably at most 155°, and wherein the sprue region (2) is preferably formed by a straight-line tunnel sprue (3).

7. The actuating member (14) according to claim 6,
wherein the region of the decorative layer (21), in which the sprue lip or sprue tab (4) is formed, at least at the edge region or arcuate region (25) has a first average layer thickness B, and wherein the region of the decorative layer (21), in which the visible region (22) is formed, at least at the edge region or arcuate region (25) has a second average layer thickness A, wherein the first average layer thickness B is less than the second average layer thickness A, wherein the second average layer thickness A is preferably 0.5 mm to 3.5 mm, and/or wherein the first average layer thickness B is preferably 0.4 mm to 3.3 mm.

8. The actuating member (14) according to claim 6 or 7,
wherein the sprue region (2) is preferably at least substantially round or oval and has an average diameter C, wherein the average diameter C of the sprue region (2) is less than the average layer thickness B of the region of the decorative layer (21) in which the sprue lip or sprue tab (4) is formed, wherein the average diameter C of the sprue region (2) is preferably 0.3 mm to 3.1 mm, and/or wherein the average layer thickness B of the region of the decorative layer (21) in which the sprue lip or sprue tab (4) is formed is preferably 0.4 mm to 3.3 mm.

9. The actuating member (14) according to any one of claims 6 to 8,
wherein the sprue lip or sprue tab (4) transitions via an intermediate region (27) into the visible region (22) of the decorative layer (21), wherein the only edge region or arcuate region (25) is arranged between the intermediate region (27) and the visible region (22), wherein the decorative layer (21) has an average layer thickness B in the region of the sprue lip or sprue tab (4) and in the intermediate region (27), wherein the average layer thickness B is preferably 0.4 to 3.3 mm.

10. The actuating member (14) according to claim 9,
wherein the intermediate region (27) has an average length D that is greater than the average layer thickness A of the decorative layer (21) in the visible region (22), wherein the decorative layer (21) has an average layer thickness in the visible region (22) of preferably 0.5 mm to 3.5 mm.

11. The actuating member (14) according to any one of claims 1 to 5,
wherein the sprue lip or sprue tab (4) is formed in a region of the decorative layer (21) that is connected by a first edge region or arcuate region (26) to an intermediate region (27) of the decorative layer (21), wherein the intermediate region (27) of the decorative layer (21) is preferably continuously connected to the visible region (22) of the decorative layer (21) by a second edge region or arcuate region (25), wherein in the first edge region or arcuate region (26), the decorative layer (21) is redirected by an angle γ of at least 45°, and preferably by an angle γ of about 90°, and wherein in the second edge region or arcuate region (25) of the decorative layer (21), the decorative layer (21) is redirected by an angle β of preferably at least 35° and preferably at the most 155°.

12. The actuating member (14) according to claim 11,
wherein the intermediate region (27) of the decorative layer (21) has an average layer thickness B, and wherein the visible region (22) of the decorative layer (21) at least at the edge region or arcuate region (25) has an average layer thickness A, wherein the average layer thickness B of the intermediate region (27) of the decorative layer (21) is less than the average layer thickness A of the visible region of the decorative layer (21), wherein the average layer thickness B of the intermediate region (27) of the decorative layer (21) at least in the edge region or the arcuate region (25) is preferably in a range between 0.3 mm to 3.5 mm, and wherein the average layer thickness A of the visible region of the decorative layer (21) at least in the edge region or the arcuate region (25) is preferably in a range between 0.4 mm to 3.7 mm.

13. The actuating member (14) according to claim 12,
wherein the sprue region (2) is preferably formed at least substantially round or oval and has an average diameter C, wherein the average diameter C of the sprue region (2) is less than the average layer thickness B of the intermediate region (27) of the decorative layer (21), wherein the average diameter C of the sprue region (2) is preferably in a range between 0.2 mm to 3.4 mm.

14. The actuating member (14) according to any one of claims 1 to 13,
wherein the decorative layer (21) is formed from a plastic material having pigments embedded therein.

15. Method for manufacturing an actuation member or handle element (14), in particular an actuation member or handle element (14) according to any one of claims 1 to 14, preferably with a multi-component injection molding process,
wherein the method comprises the following method steps:
A) manufacturing a carrier substrate (20) from a first plastic in a first injection molding shot using a first mold half and a second mold half defining a first cavity, resulting in a first molded part; and
B) manufacturing a decorative layer (21) in a second injection molding shot onto the first molded part onto an outer surface of the first molded part after a change of the second mold half to define a second cavity, resulting in a second molded part while the first molded part remains in the first mold half until the second molded part has been shot onto the first molded part,
or wherein the method comprises the following method steps:
A) manufacturing a decorative layer (21) from a first plastic in a first injection molding shot using a first mold half and a second mold half defining a first cavity, resulting in a first molded part; and
B) manufacturing a carrier substrate (20) in a second injection molding shot onto the first molded part onto an outer surface of the first molded part after a change of the second mold half to define a second cavity, resulting in a second molded part while the first molded part remains in the first mold half until the second molded part has been shot onto the first molded part,
wherein, in the second injection molding shot, the heated injection molding compound of the second plastic is initially injected into a homogenization region in the mold cavity defined by the first molded part and the second mold half, wherein the homogenization region is formed by at least one sprue region (2) formed in a sprue lip or sprue tab (4) and by at least one edge region or arcuate region (25, 26), via which the sprue region (2) is connected to a visible region (22) of the decorative layer (21), preferably in a continuous manner, and wherein the homogenization region causes a homogenization of the melt and a fluidic smoothing of the melt.

## Revendications

1. Élément d'actionnement (14), en particulier un élément de poignée, un
agencement de poignée de portière intérieure d'un véhicule, dans lequel l'élément d'actionnement (14) comprend un substrat de support (20) de préférence fabriqué en plastique et une couche décorative (21) recouvrant au moins localement la surface du substrat de support (20), dans lequel la couche décorative (21) comprend :
- une région visible (22) qui, en particulier dans l'état installé prévu de l'élément d'actionnement (14) et en outre en particulier dans l'état non actionné de l'élément d'actionnement (14), forme un côté visible de l'élément d'actionnement (14) ;
- au moins une région de zone d'entrée (2) formée dans une lèvre de zone d'entrée ou une languette de zone d'entrée (4) ; et
- au moins une région de bord ou une région arquée (25, 26) par laquelle la région de zone d'entrée (2) est de préférence connectée en continu à la région visible (22) de la couche décorative (21).

2. Élément d'actionnement (14) selon la revendication 1,
dans lequel la lèvre de zone d'entrée ou la languette de zone d'entrée (4), dans laquelle l'au moins une région de zone d'entrée (2) est formée, comme vu sur une vue de dessus, a une conception au moins sensiblement en forme de U, en forme de V ou en forme de coin, et dans lequel la lèvre de zone d'entrée ou la languette de zone d'entrée (4) s'effile à partir de l'au moins une région de bord ou région arquée (25, 26) vers l'au moins une région de zone d'entrée (2) ; et/ou
dans lequel la lèvre de zone d'entrée ou la languette de zone d'entrée (4), dans laquelle l'au moins une région de zone d'entrée (2) est formée, est de préférence formée dans une région d'extrémité de l'élément d'actionnement (14), et en particulier dans une région convergente de l'élément d'actionnement (14).

3. Élément d'actionnement (14) selon la revendication 1 ou 2, dans lequel, comme vu sur une vue de dessus sur la lèvre de zone d'entrée ou la languette de zone d'entrée (4), la lèvre de zone d'entrée ou la languette de zone d'entrée (4) a deux lignes de délimitation (5) divergeant l'une par rapport à l'autre vers l'au moins une région de bord ou région arquée (25, 26) et adjacentes au substrat de support (20) qui convergent dans la région de l'au moins une région de zone d'entrée (2), en particulier d'une manière continue et de préférence sur au moins une et en particulier deux régions incurvées avec une courbure constante.

4. Élément d'actionnement (14) selon la revendication 3,
dans lequel un angle α est couvert entre les lignes de délimitation divergentes (5) dans la direction de l'au moins une région de bord ou région arquée (25, 26), dans lequel de préférence 90° > α > 10° s'applique ; et/ou dans lequel chacune parmi les lignes de délimitation divergentes (5) comprend une région incurvée avec une constante et en particulier la même courbure dans l'au moins une région de bord ou région arquée (25, 26), dans lequel la courbure de la région incurvée, par les lignes de délimitation divergentes (5), passant chacune vers l'au moins une région de bord ou région arquée (25, 26), correspond de préférence à la courbure de l'au moins une région arquée par laquelle les lignes de délimitation (5) adjacentes au substrat de support (20) convergent.

5. Élément d'actionnement (14) selon l'une quelconque des revendications 1 à 4,
dans lequel l'au moins une région de bord ou région arquée (25, 26) est sélectionnée entre l'au moins une région de zone d'entrée (2) et la région visible (22) de la couche décorative (21) de sorte que la couche décorative (21) est de préférence redirigée de manière continue à partir de l'au moins une région de zone d'entrée (2) vers la région visible (22) d'un angle β d'au moins 35° et plus préférablement redirigée de manière continue d'un angle β d'au moins 45° ; et/ou
dans lequel l'au moins une région de bord ou région arquée (25, 26) est sélectionnée entre l'au moins une région de zone d'entrée (2) et la région visible (22) de la couche décorative (21) de sorte que la couche décorative (21) est de préférence redirigée de manière continue à partir de la région de zone d'entrée (2) vers la région visible (22) d'un angle β ne dépassant pas 155° et plus préférablement redirigée de manière continue d'un angle β ne dépassant pas 145° .

6. Élément d'actionnement (14) selon l'une quelconque des revendications 1 à 5,
dans lequel la lèvre de zone d'entrée ou la languette de zone d'entrée (4) est formée dans une région de la couche décorative (21) qui est de préférence connectée en continu à la région visible (22) de la couche décorative (21) par une seule région de bord ou région arquée (25), dans lequel la couche décorative (21) est redirigée à partir de la région de zone d'entrée (2) vers la région visible (22) par la seule région de bord ou région arquée (25) d'un angle β de préférence d'au moins 35° et de préférence ne dépassant pas 155°, et dans lequel la région de zone d'entrée (2) est de préférence formée par une zone d'entrée tunnel rectiligne (3).

7. Élément d'actionnement (14) selon la revendication 6,
dans lequel la région de la couche décorative (21), dans laquelle la lèvre de zone d'entrée ou la languette de zone d'entrée (4) est formée, au moins sur la région de bord ou la région arquée (25) a une première épaisseur de couche moyenne B, et dans lequel la région de la couche décorative (21), dans laquelle la région visible (22) est formée, au moins sur la région de bord ou la région arquée (25) a une deuxième épaisseur de couche moyenne A, dans lequel la première épaisseur de couche moyenne B est inférieure à la deuxième épaisseur de couche moyenne A, dans lequel la deuxième épaisseur de couche moyenne A est de préférence de 0,5 mm à 3,5 mm, et/ou dans lequel la première épaisseur de couche moyenne B est de préférence de 0,4 mm à 3,3 mm.

8. Élément d'actionnement (14) selon la revendication 6 ou 7, dans lequel la région de zone d'entrée (2) est de préférence au moins sensiblement ronde ou ovale et a un diamètre moyen C, dans lequel le diamètre moyen C de la région de zone d'entrée (2) est inférieur à l'épaisseur de couche moyenne B de la région de la couche décorative (21) dans laquelle la lèvre de zone d'entrée ou la languette de zone d'entrée (4) est formée, dans lequel le diamètre moyen C de la région de zone d'entrée (2) est de préférence de 0,3 mm à 3,1 mm, et/ou dans lequel l'épaisseur de couche moyenne B de la région de la couche décorative (21) dans laquelle la lèvre de zone d'entrée ou la languette de zone d'entrée (4) est formée est de préférence de 0,4 mm à 3,3 mm.

9. Élément d'actionnement (14) selon l'une quelconque des revendications 6 à 8,
dans lequel la lèvre de zone d'entrée ou la languette de zone d'entrée (4) passe sur une région intermédiaire (27) dans la région visible (22) de la couche décorative (21), dans lequel la seule région de bord ou région arquée (25) est agencée entre la région intermédiaire (27) et la région visible (22), dans lequel la couche décorative (21) a une épaisseur de couche moyenne B dans la région de la lèvre de zone d'entrée ou de la languette de zone d'entrée (4) et dans la région intermédiaire (27), dans laquelle l'épaisseur de couche moyenne B est de préférence de 0,4 à 3,3 mm.

10. Élément d'actionnement (14) selon la revendication 9,
dans lequel la région intermédiaire (27) a une longueur moyenne D qui est supérieure à l'épaisseur de couche moyenne A de la couche décorative (21) dans la région visible (22), dans lequel la couche décorative (21) a une épaisseur de couche moyenne dans la région visible (22) de préférence de 0,5 mm à 3,5 mm.

11. Élément d'actionnement (14) selon l'une quelconque des revendications 1 à 5,
dans lequel la lèvre de zone d'entrée ou la languette de zone d'entrée (4) est formée dans une région de la couche décorative (21) qui est connectée par une première région de bord ou région arquée (26) à une région intermédiaire (27) de la couche décorative (21), dans lequel la région intermédiaire (27) de la couche décorative (21) est de préférence connectée en continu à la région visible (22) de la couche décorative (21) par une deuxième région de bord ou région arquée (25), dans lequel dans la première région de bord ou région arquée (26), la couche décorative (21) est redirigée d'un angle γ d'au moins 45°, et de préférence d'un angle γ d'environ 90°, et dans lequel dans la deuxième région de bord ou région arquée (25) de la couche décorative (21), la couche décorative (21) est redirigée d'un angle β de préférence d'au moins 35° et de préférence ne dépassant pas 155°.

12. Élément d'actionnement (14) selon la revendication 11,
dans lequel la région intermédiaire (27) de la couche décorative (21) a une épaisseur de couche moyenne B, et dans lequel la région visible (22) de la couche décorative (21) au moins sur la région de bord ou la région arquée (25) a une épaisseur de couche moyenne A, dans lequel l'épaisseur de couche moyenne B de la région intermédiaire (27) de la couche décorative (21) est inférieure à l'épaisseur de couche moyenne A de la région visible de la couche décorative (21), dans lequel l'épaisseur de couche moyenne B de la région intermédiaire (27) de la couche décorative (21) au moins dans la région de bord ou la région arquée (25) est de préférence dans une plage entre 0,3 mm et 3,5 mm, et dans lequel l'épaisseur de couche moyenne A de la région visible de la couche décorative (21) au moins dans la région de bord ou la région arquée (25) est de préférence dans une plage entre 0,4 mm et 3,7 mm.

13. Élément d'actionnement (14) selon la revendication 12,
dans lequel la région de zone d'entrée (2) est de préférence formée au moins sensiblement ronde ou ovale et a un diamètre moyen C, dans lequel le diamètre moyen C de la région de zone d'entrée (2) est inférieur à l'épaisseur de couche moyenne B de la région intermédiaire (27) de la couche décorative (21), dans lequel le diamètre moyen C de la région de zone d'entrée (2) est de préférence dans une plage entre 0,2 mm et 3,4 mm.

14. Élément d'actionnement (14) selon l'une quelconque
des revendications 1 à 13,
dans lequel la couche décorative (21) est formée à partir d'une matière plastique ayant des pigments noyés dans celle-ci.

15. Procédé de fabrication d'un élément d'actionnement ou d'un élément de poignée (14), en particulier d'un élément d'actionnement ou d'un élément de poignée (14) selon l'une quelconque des revendications 1 à 14, de préférence avec un procédé de moulage par injection à plusieurs composants,
dans lequel le procédé comprend les étapes de procédé suivantes :
A) la fabrication d'un substrat de support (20) à partir d'une première matière plastique dans un première moulage par injection à l'aide d'une première moitié de moule et d'une deuxième moitié de moule définissant une première cavité, résultant en une première partie moulée ; et
B) la fabrication d'une couche décorative (21) dans un deuxième moulage par injection sur la première partie moulée sur une surface externe de la première partie moulée après un changement de la deuxième moitié de moule pour définir une deuxième cavité, résultant en une deuxième partie moulée tandis que la première partie moulée reste dans la première moitié de moule jusqu'à ce que la deuxième partie moulée ait été injectée sur la première partie moulée,
ou dans lequel le procédé comprend les étapes de procédé suivantes :
A) la fabrication d'une couche décorative (21) à partir d'une première matière plastique dans un premier moulage par à l'aide d'une première moitié de moule et d'une deuxième moitié de moule définissant une première cavité, résultant en une première partie moulée ; et
B) la fabrication d'un substrat de support (20) dans un deuxième moulage par injection sur la première partie moulée sur une surface externe de la première partie moulée après un changement de la deuxième moitié de moule pour définir une deuxième cavité, résultant en une deuxième partie moulée tandis que la première partie moulée reste dans la première moitié de moule jusqu'à ce que la deuxième partie moulée ait été moulée sur la première partie moulée,
dans lequel, dans le deuxième moulage par injection, le composé de moulage par injection chauffé de la deuxième matière plastique est initialement injecté dans une région d'homogénéisation dans la cavité de moule définie par la première partie moulée et la deuxième moitié de moule, dans lequel la région d'homogénéisation est formée par au moins une région de zone d'entrée (2) formée dans une lèvre de zone d'entrée ou une languette de zone d'entrée (4) et par au moins une région de bord ou une région arquée (25, 26), via laquelle la région de zone d'entrée (2) est connectée à une région visible (22) de la couche décorative (21), de préférence de manière continue, et dans lequel la région d'homogénéisation provoque une homogénéisation de la masse fondue et un lissage fluidique de la masse fondue.
